(19) Europäisches Patentamt / European Patent Office / Office européen des brevets

(11) **EP 4 718 741 A1**

(12) **EUROPEAN PATENT APPLICATION**
published in accordance with Art. 153(4) EPC

(43) Date of publication:
01.04.2026 Bulletin 2026/14

(21) Application number: 24838543.7

(22) Date of filing: 18.06.2024

(51) International Patent Classification (IPC):
**H04B 7/0456** (2017.01)

(52) Cooperative Patent Classification (CPC):
**H04B 7/0456; H04B 7/06**

(86) International application number:
**PCT/CN2024/099914**

(87) International publication number:
**WO 2025/011285 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 07.07.2023 CN 202310838925

(71) Applicant: Huawei Technologies Co., Ltd.
Shenzhen, Guangdong 518129 (CN)

(72) Inventors:
• YAN, Mao
  Shenzhen, Guangdong 518129 (CN)
• XIU, Yue
  Shenzhen, Guangdong 518129 (CN)
• CHEN, Lei
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **TRANSMISSION METHOD FOR PRECODING MATRIX AND COMMUNICATION APPARATUS**

(57) This application provides a precoding matrix transmission method and a communication apparatus, to reduce overheads for feeding back channel information and reduce power consumption of a terminal device. The method includes: receiving first configuration information, where the first configuration information is for configuring resources of K port groups, each of the K port groups includes a plurality of antenna ports, and K is a positive integer; and sending first precoding matrix indicator PMI information, where the first PMI information is determined based on P groups of channel information, the P groups of channel information are determined based on a reference signal received on the resources of the K port groups, and P is an integer greater than 1.

FIG. 4

**Description**

CROSS-REFERENCE TO RELATED APPLICATIONS

This application claims priority to Chinese Patent Application No. 202310838925.2, filed with the China National Intellectual Property Administration on July 7, 2023 and entitled "PRECODING MATRIX TRANSMISSION METHOD AND COMMUNICATION APPARATUS", which is incorporated herein by reference in its entirety.

TECHNICAL FIELD

This application relates to the field of communication technologies, and in particular, to a precoding matrix transmission method and a communication apparatus.

BACKGROUND

In a hybrid beamforming (Hybrid beamforming, HBF) scenario, a network device may select directions of a plurality of analog beams, and deliver, by using different analog beams, pilot signals for channel estimation. For a terminal device, a process in which the network device selects analog beams is referred to as beam training or beam sweeping.
Currently, the network device allocates different pilot resources to different analog beams, and the terminal device measures pilot signals based on the different pilot resources and feeds back measurement results. However, the network device can select only one analog beam at a same moment, that is, the pilot signals corresponding to the different analog beams can be sent only in a time-sharing manner, reducing communication efficiency. In addition, as more analog beams are selected, the terminal device needs to measure more pilot resources, and feedback overheads are higher, increasing power consumption of the terminal device.

SUMMARY

This application provides a precoding matrix transmission method and a communication apparatus, to reduce overheads for feeding back channel information by a terminal device side and reduce power consumption of a terminal device.
According to a first aspect, an embodiment of this application provides a precoding matrix transmission method, applied to a terminal device. The method includes: receiving first configuration information, where the first configuration information is for configuring resources of K port groups, each of the K port groups includes a plurality of antenna ports, and K is a positive integer; and sending first precoding matrix indicator PMI information, where the first PMI information is determined based on P groups of channel information, the P groups of channel information are determined based on a reference signal received on the resources of the K port groups, and P is an integer greater than 1. In such a design, joint feedback for a plurality of groups of channel information is implemented, that is, the plurality of groups of channel information are fed back simultaneously, to reduce overheads for feeding back channel information by a terminal device side and reduce power consumption of the terminal device.
In a possible design, the first configuration information is further for configuring Q groups of coefficients; and before sending the first precoding matrix indicator PMI information, the method further includes: determining K groups of channel information based on the reference signal received on the resources of the K port groups, where the K groups of channel information respectively correspond to the K port groups; and determining the Q groups of channel information based on the Q groups of coefficients and the K groups of channel information, where Q is greater than K, and the Q groups of channel information include the P groups of channel information. In such a design, a network device sends fewer reference signals, and the terminal device simulates more channel information based on the Q groups of coefficients (or referred to as weighting coefficients), to reduce communication overheads between the network device and the terminal device, for example, reduce communication overheads for the reference signals.
In another possible design, K is greater than 1; and before sending the first precoding matrix indicator PMI information, the method further includes: determining K groups of channel information based on the reference signal received on the resources of the K port groups, where the K groups of channel information respectively correspond to the K port groups, and the K groups of channel information include the P groups of channel information. In such a design, the terminal device is supported in flexibly selecting a part or all of the groups of channel information in the K groups of channel information estimated based on the reference signal for feedback.
In a possible design, the method further includes: receiving second configuration information, where the second configuration information is for configuring the first codebook parameter combination and/or a quantity $N_3$ of first precoding matrices, a value of at least one parameter in the first codebook parameter combination is determined based on a value of P, and the quantity $N_3$ of first precoding matrices is determined based on the value of P. For example, the first codebook parameter combination includes one or more of the following parameters: a quantity L of beams, a factor $p_\upsilon$ of a quantity of vectors, and a factor $\beta$ of a quantity of non-zero elements. The first codebook parameter combination corresponding to a quantity P of pieces of to-be-reported information is designed, to adapt to a plurality of feedback quantity requirements, and make an implementation more flexible.

In a possible design, the quantity $N_3$ of first precoding matrices and the value of P satisfy the following relationship: $N_3 = \sum_{p=0}^{P-1} N_{3,p}$ , where $N_{3,p}$ is a quantity of sub-bands corresponding to a p$^{th}$ group of channel information in the P groups of channel information, and p is an integer from 0 to P-1.

In a possible design, the first PMI information is determined based on the first codebook parameter combination and the $N_3$ first precoding matrices, where an i$^{th}$ first precoding matrix in the $N_3$ first precoding matrices is an $\lfloor i/P \rfloor^{th}$ precoding matrix in an (i mod P)$^{th}$ group of channel information in the P groups of channel information, or the i$^{th}$ first precoding matrix in the $N_3$ first precoding matrices is an ($N_{3,p}$ mod P)$^{th}$ precoding matrix in an $\lfloor i/N_{3,p} \rfloor^{th}$ group of channel information in the P groups of channel information; and mod is a modulo operator, i is an integer from 1 to $N_3$, and $\lfloor \rfloor$ represents a rounding down operator. In such a design, a correlation between channel information is considered, and precoding matrices of the P groups of channel information are rearranged and compressed in frequency domain, to implement joint feedback for the P groups of channel information, thereby improving an information expression capability and reducing feedback overheads.

In a possible design, the method further includes: receiving third configuration information, where the third configuration information is for configuring a second codebook parameter combination and/or a quantity $P_{CSI-RS}$ of second precoding matrices, a value of at least one parameter in the second codebook parameter combination is determined based on a value of P, and the quantity $P_{CSI-RS}$ of second precoding matrices is determined based on the value of P. For example, the second codebook parameter combination includes one or more of the following parameters: a first dimension $N_1$, a second dimension $N_2$, a first coefficient $O_1$, and a second coefficient $O_2$. The second codebook parameter combination corresponding to a quantity P of pieces of to-be-reported information is designed, to adapt to a plurality of feedback quantity requirements, and make an implementation more flexible.

In a possible design, the quantity $P_{CSI-RS}$ of second precoding matrices and the value of P satisfy the following relationship: $P_{CSI-RS} = \sum_{p=0}^{P-1} P_{CSI-RS,p}$, where $P_{CSI-RS,p}$ is a quantity of antenna ports corresponding to a p$^{th}$ group of channel information in the P groups of channel information, and p is an integer from 0 to P-1.

In a possible design, the first PMI information is determined based on the second codebook parameter combination and the $P_{CSI-RS}$ second precoding matrices, where a j$^{th}$ precoding matrix in the $P_{CSI-RS}$ first precoding matrices is a $\lfloor j/P \rfloor^{th}$ precoding matrix in a (j mod P)$^{th}$ group of channel information in the P groups of channel information, or the j$^{th}$ precoding matrix in the $P_{CSI-RS}$ second precoding matrices is a ($P_{CSI-RS,p}$ mod P)$^{th}$ precoding matrix in a $\lfloor j/P_{CSI-RS,p} \rfloor^{th}$ group of channel information in the P groups of channel information; and mod is a modulo operator, j is an integer from 1 to $P_{CSI-RS}$, and $\lfloor \rfloor$ represents a rounding down operator. In such a design, a correlation between channel information is considered, and precoding matrices of the P groups of channel information are rearranged and compressed in space domain, to implement joint feedback for the P groups of channel information, thereby improving an information expression capability and reducing feedback overheads.

In a possible design, the P groups of channel information may be indicated by the network device to the terminal device. For example, the method further includes: receiving information indicating the value of P; or receiving index set information indicating the P groups of channel information.

According to a second aspect, an embodiment of this application provides a precoding matrix transmission method, applied to a network device. The method includes: sending first configuration information, where the first configuration information is for configuring resources of K port groups, each of the K port groups includes a plurality of antenna ports, and K is a positive integer; and receiving first precoding matrix indicator PMI information, where the first PMI information is determined based on P groups of channel information, the P groups of channel information are determined based on a reference signal on the resources of the K port groups, and P is an integer greater than 1.

In a possible design, the first configuration information is further for configuring Q groups of coefficients, the Q groups of coefficients are for determining Q groups of channel information, the Q groups of channel information include the P groups of channel information, Q is greater than K, and Q is greater than or equal to P.

In a possible design, the K groups of channel information include the P groups of channel information, and the K groups of channel information respectively correspond to the K port groups.

In a possible design, the method further includes: sending second configuration information, where the second configuration information is for configuring the first codebook parameter combination and/or a quantity $N_3$ of first precoding matrices, a value of at least one parameter in the first codebook parameter combination is determined based on a value of P, and the quantity $N_3$ of first precoding matrices is determined based on the value of P. For example, the first codebook parameter combination includes one or more of the following parameters: a quantity L of beams, a factor $p_0$ of a quantity of vectors, and a factor $\beta$ of a quantity of non-zero elements.

In a possible design, the quantity $N_3$ of first precoding matrices and the value of P satisfy the following relationship: $N_3 = \sum_{p=0}^{P-1} N_{3,p}$, where $N_{3,p}$ is a quantity of sub-bands corresponding to a $p^{th}$ group of channel information in the P groups of channel information, and p is an integer from 0 to P-1.

In a possible design, the first PMI information is determined based on the first codebook parameter combination and the $N_3$ first precoding matrices, where an $i^{th}$ first precoding matrix in the $N_3$ first precoding matrices is an $\lfloor i/P \rfloor^{th}$ precoding matrix in an (i mod P)$^{th}$ group of channel information in the P groups of channel information, or the $i^{th}$ first precoding matrix in the $N_3$ first precoding matrices is an $(N_{3,p} \bmod P)^{th}$ precoding matrix in an $\lfloor i/N_{3,p} \rfloor^{th}$ group of channel information in the P groups of channel information; and mod is a modulo operator, i is an integer from 1 to $N_3$, and $\lfloor \rfloor$ represents a rounding down operator.

In a possible design, the method further includes: sending second configuration information, where the second configuration information is for configuring a second codebook parameter combination and/or a quantity $P_{CSI-RS}$ of second precoding matrices, a value of at least one parameter in the second codebook parameter combination is determined based on a value of P, and the quantity $P_{CSI-RS}$ of second precoding matrices is determined based on the value of P. For example, the second codebook parameter combination includes one or more of the following parameters: a first dimension $N_1$, a first dimension $N_2$, a first coefficient $O_1$, and a second coefficient $O_2$.

In a possible design, the quantity $P_{CSI-RS}$ of second precoding matrices and the value of P satisfy the following relationship: $P_{CSI-RS} = \sum_{p=0}^{P-1} P_{CSI-RS,p}$, where $P_{CSI-RS,p}$ is a quantity of antenna ports corresponding to a $p^{th}$ group of channel information in the P groups of channel information, and p is an integer from 0 to P-1.

In a possible design, the first PMI information is determined based on the second codebook parameter combination and the $P_{CSI-RS}$ second precoding matrices, where a $j^{th}$ precoding matrix in the $P_{CSI-RS}$ first precoding matrices is a $\lfloor j/P \rfloor^{th}$ precoding matrix in a (j mod P)$^{th}$ group of channel information in the P groups of channel information, or the $j^{th}$ precoding matrix in the $P_{CSI-RS}$ second precoding matrices is a $(P_{CSI-RS,p} \bmod P)^{th}$ precoding matrix in a $\lfloor j/P_{CSI-RS,p} \rfloor^{th}$ group of channel information in the P groups of channel information; and mod is a modulo operator, j is an integer from 1 to $P_{CSI-RS}$, and $\lfloor \rfloor$ represents a rounding down operator.

In a possible design, the method further includes: sending information indicating the value of P; or sending index set information indicating the P groups of channel information.

According to a third aspect, an embodiment of this application provides a communication apparatus. The communication apparatus may be a terminal device, or may be an apparatus, a module, a chip, or the like in the terminal device, or may be an apparatus that can be used in matching with the terminal device. In a design, the communication apparatus may include modules that are in one-to-one correspondence with the methods/operations/steps/actions described in the first aspect. The module may be a hardware circuit, or may be software, or may be implemented by a hardware circuit in combination with software. In a design, the communication apparatus may include a processing module and a communication module.

The communication module is configured to: under control of the processing module, perform the following operations:

receiving first configuration information, where the first configuration information is for configuring resources of K port groups, each of the K port groups includes a plurality of antenna ports, and K is a positive integer; and
sending first precoding matrix indicator PMI information, where the first PMI information is determined based on P groups of channel information, the P groups of channel information are determined based on a reference signal received on the resources of the K port groups, and P is an integer greater than 1. It may be understood that, the processing module is further configured to determine the first precoding matrix indicator PMI information.

In a possible design, the first configuration information is further for configuring Q groups of coefficients; and before controlling the communication module to send the first precoding matrix indicator PMI information, the processing module is further configured to determine K groups of channel information based on the reference signal received on the resources of the K port groups, where the K groups of channel information respectively correspond to the K port groups; and determine the Q groups of channel information based on the Q groups of coefficients and the K groups of channel information, where Q is greater than K, and the Q groups of channel information include the P groups of channel information.

In another possible design, K is greater than 1; and before controlling the communication module to send the first precoding matrix indicator PMI information, the processing module is further configured to determine K groups of channel information based on the reference signal received on the resources of the K port groups, where the K groups of channel information respectively correspond to the K port groups, and the K groups of channel information include the P groups of channel information.

In a possible design, the communication module is further configured to obtain second configuration information, where the second configuration information is for configuring the first codebook parameter combination and/or a quantity $N_3$ of first precoding matrices, a value of at least one parameter in the first codebook parameter combination is determined based on a value of P, and the quantity $N_3$ of first precoding matrices is determined based on the value of P. For example, the first codebook parameter combination includes one or more of the following parameters: a quantity L of beams, a factor $p_0$ of a quantity of vectors, and a factor $\beta$ of a quantity of non-zero elements.

In a possible design, the quantity $N_3$ of first precoding matrices and the value of P satisfy the following relationship: $N_3 = \sum_{p=0}^{P-1} N_{3,p}$ , where $N_{3,p}$ is a quantity of sub-bands corresponding to a $p^{th}$ group of channel information in the P groups of channel information, and p is an integer from 0 to P-1.

In a possible design, the first PMI information is determined based on the first codebook parameter combination and the $N_3$ first precoding matrices, where an $i^{th}$ first precoding matrix in the $N_3$ first precoding matrices is an $\lfloor i/P \rfloor^{th}$ precoding matrix in an (i mod P)$^{th}$ group of channel information in the P groups of channel information, or the $i^{th}$ first precoding matrix in the $N_3$ first precoding matrices is an $(N_{3,p} \bmod P)^{th}$ precoding matrix in an $\lfloor i/N_{3,p} \rfloor^{th}$ group of channel information in the P groups of channel information; and mod is a modulo operator, i is an integer from 1 to $N_3$, and $\lfloor \rfloor$ represents a rounding down operator.

In a possible design, the communication module is further configured to receive third configuration information, where the third configuration information is for configuring a second codebook parameter combination and/or a quantity $P_{CSI\text{-}RS}$ of second precoding matrices, a value of at least one parameter in the second codebook parameter combination is determined based on a value of P, and the quantity $P_{CSI\text{-}RS}$ of second precoding matrices is determined based on the value of P. For example, the second codebook parameter combination includes one or more of the following parameters: a first dimension $N_1$, a second dimension $N_2$, a first coefficient $O_1$, and a second coefficient $O_2$.

In a possible design, the quantity $P_{CSI\text{-}RS}$ of second precoding matrices and the value of P satisfy the following relationship: $P_{CSI-RS} = \sum_{p=0}^{P-1} P_{CSI-RS,p}$ , where $P_{CSI\text{-}RS,p}$ is a quantity of antenna ports corresponding to a $p^{th}$ group of channel information in the P groups of channel information, and p is an integer from 0 to P-1.

In a possible design, the first PMI information is determined based on the second codebook parameter combination and the $P_{CSI\text{-}RS}$ second precoding matrices, where a $j^{th}$ precoding matrix in the $P_{CSI\text{-}RS}$ first precoding matrices is a $\lfloor j/P \rfloor^{th}$ precoding matrix in a (j mod P)$^{th}$ group of channel information in the P groups of channel information, or the $j^{th}$ precoding matrix in the $P_{CSI\text{-}RS}$ second precoding matrices is a $(P_{CSI\text{-}RS,p} \bmod P)^{th}$ precoding matrix in a $\lfloor j/P_{CSI-RS,p} \rfloor^{th}$ group of channel information in the P groups of channel information; and j is an integer from 1 to $P_{CSI\text{-}RS}$, and $\lfloor \rfloor$ represents a rounding down operator.

In a possible design, the communication module is further configured to receive information indicating the value of P; or receive index set information indicating the P groups of channel information. The processing module is further configured to determine the P groups of channel information based on the information indicating the value of P; or determine the P groups of channel information based on the index set information indicating the P groups of channel information.

According to a fourth aspect, an embodiment of this application provides a communication apparatus. The communication apparatus may be a network device, or may be an apparatus, a module, a chip, or the like in the network device, or may be an apparatus that can be used in matching with the network device. In a design, the communication apparatus may include modules that are in one-to-one correspondence with the methods/operations/steps/actions described in the second aspect. The module may be a hardware circuit, or may be software, or may be implemented by a hardware circuit in combination with software. In a design, the communication apparatus may include a processing module and a communication module.

The communication module is configured to: under control of the processing module, perform the following operations:

sending first configuration information, where the first configuration information is for configuring resources of K port groups, each of the K port groups includes a plurality of antenna ports, and K is a positive integer; and receiving first precoding matrix indicator PMI information, where the first PMI information is determined based on P groups of channel information, the P groups of channel information are determined based on a reference signal on the resources of the K port groups, and P is an integer greater than 1.

In a possible design, the first configuration information is further for configuring Q groups of coefficients, the Q groups of coefficients are for determining Q groups of channel information, the Q groups of channel information include the P groups of channel information, Q is greater than K, and Q is greater than or equal to P.

In a possible design, the K groups of channel information include the P groups of channel information, and the K groups of channel information respectively correspond to the K port groups.

In a possible design, the communication module is further configured to: under control of the processing module, send second configuration information, where the second configuration information is for configuring the first codebook parameter combination and/or a quantity $N_3$ of first precoding matrices, a value of at least one parameter in the first codebook parameter combination is determined based on a value of P, and the quantity $N_3$ of first precoding matrices is determined based on the value of P. For example, the first codebook parameter combination includes one or more of the following parameters: a quantity L of beams, a factor $p_v$ of a quantity of vectors, and a factor $\beta$ of a quantity of non-zero elements.

In a possible design, the quantity $N_3$ of first precoding matrices and the value of P satisfy the following relationship: $N_3 = \sum_{p=0}^{P-1} N_{3,p}$ , where $N_{3,p}$ is a quantity of sub-bands corresponding to a $p^{th}$ group of channel information in the P groups of channel information, and p is an integer from 0 to P-1.

In a possible design, the first PMI information is determined based on the first codebook parameter combination and the $N_3$ first precoding matrices, where an $i^{th}$ first precoding matrix in the $N_3$ first precoding matrices is an $\lfloor i/P \rfloor^{th}$ precoding matrix in an (i mod P)$^{th}$ group of channel information in the P groups of channel information, or the $i^{th}$ first precoding matrix in the $N_3$ first precoding matrices is an ($N_{3,p}$ mod P)$^{th}$ precoding matrix in an $\lfloor i/N_{3,p} \rfloor^{th}$ group of channel information in the P groups of channel information; and i is an integer from 1 to $N_3$, and $\lfloor \rfloor$ represents a rounding down operator.

In a possible design, the communication module is further configured to: under control of the processing module, send third configuration information, where the third configuration information is for configuring a second codebook parameter combination and/or a quantity $P_{CSI-RS}$ of second precoding matrices, a value of at least one parameter in the second codebook parameter combination is determined based on a value of P, and the quantity $P_{CSI-RS}$ of second precoding matrices is determined based on the value of P. For example, the second codebook parameter combination includes one or more of the following parameters: a first dimension $N_1$, a first dimension $N_2$, a first coefficient $O_1$, and a second coefficient $O_2$.

In a possible design, the quantity $P_{CSI-RS}$ of second precoding matrices and the value of P satisfy the following relationship: $P_{CSI-RS} = \sum_{p=0}^{P-1} P_{CSI-RS,p}$ , where $P_{CSI-RS,p}$ is a quantity of antenna ports corresponding to a $p^{th}$ group of channel information in the P groups of channel information, and p is an integer from 0 to P-1.

In a possible design, the first PMI information is determined based on the second codebook parameter combination and the $P_{CSI-RS}$ second precoding matrices, where a $j^{th}$ precoding matrix in the $P_{CSI-RS}$ first precoding matrices is a $\lfloor j/P \rfloor^{th}$ precoding matrix in a (j mod P)$^{th}$ group of channel information in the P groups of channel information, or the $j^{th}$ precoding matrix in the $P_{CSI-RS}$ second precoding matrices is a ($P_{CSI-RS,p}$ mod P)$^{th}$ precoding matrix in a $\lfloor j/P_{CSI-RS,p} \rfloor^{th}$ group of channel information in the P groups of channel information; and j is an integer from 1 to $P_{CSI-RS}$, and $\lfloor \rfloor$ represents a rounding down operator.

In a possible design, the communication module is further configured to: under control of the processing module, send information indicating the value of P; or send index set information indicating the P groups of channel information.

According to a fifth aspect, an embodiment of this application provides a communication apparatus. The communication apparatus includes a processor, configured to implement the method described in the first aspect. The processor is coupled to a memory, and the memory is configured to store instructions and data. When executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a sixth aspect, an embodiment of this application provides a communication apparatus. The communication apparatus includes a processor, configured to implement the method described in the second aspect. The processor is coupled to a memory, and the memory is configured to store instructions and data. When executing the instructions stored in the memory, the processor may implement the method described in the second aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a seventh aspect, an embodiment of this application provides a communication system, including the communication apparatus described in the third aspect or the fifth aspect, and the communication apparatus described in the fourth aspect or the sixth aspect.

According to an eighth aspect, an embodiment of this application further provides a computer program. When the computer program is run on a computer, the computer is caused to perform the method provided in the first aspect or the second aspect.

According to a ninth aspect, an embodiment of this application further provides a computer program product, including instructions. When the instructions are run on a computer, the computer is caused to perform the method provided in the first aspect or the second aspect.

According to a tenth aspect, an embodiment of this application further provides a computer-readable storage medium. The computer-readable storage medium stores a computer program or instructions. When the computer program or the instructions are run on a computer, the computer is caused to perform the method provided in the first aspect or the second aspect.

According to an eleventh aspect, an embodiment of this application further provides a chip. The chip is configured to read a computer program stored in a memory, to perform the method provided in the first aspect or the second aspect, or the chip includes a circuit configured to perform the method provided in the first aspect or the second aspect.

According to a twelfth aspect, an embodiment of this application further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effects of the solutions provided in any one of the second aspect to the twelfth aspect, refer to the corresponding descriptions in the first aspect.

BRIEF DESCRIPTION OF DRAWINGS

FIG. 1A is a diagram of an architecture of a communication system;
FIG. 1B is a diagram of an architecture of a radio access network RAN;
FIG. 2 is a diagram of an architecture of HBF;
FIG. 3 is a schematic flowchart of existing feedback for PMIs of a plurality of analog beams;
FIG. 4 is a schematic flowchart of a precoding matrix transmission method according to an embodiment of this application;
FIG. 5 is a diagram of splicing frequency domain information according to an embodiment of this application;
FIG. 6(a) to FIG. 6(c) are a diagram of splicing space domain information according to an embodiment of this application;
FIG. 7 is a diagram of a structure of a communication apparatus according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

DESCRIPTION OF EMBODIMENTS

To make objectives, technical solutions, and advantages of embodiments of this application clearer, the following further describes embodiments of this application in detail with reference to accompanying drawings.

At least one (item) in embodiments of this application indicates one or more (items). "A plurality of (items)" means two (items) or more than two (items). A term "and/or" describes an association relationship of associated objects, and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in embodiments of this application to describe objects, these objects should not be limited by these terms. These terms are merely used for distinguishing the objects from each other.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, a term like "example" or "for example" is used to represent giving an example, an illustration, or a description. Any method or design solution described as an "example" or "for example" in embodiments of this application should not be explained as being more preferred or having more advantages than another method or design solution. Exactly, use of the term like "example" or "for example" is intended to present a related concept in a specific manner.

Technologies provided in embodiments of this application may be applied to various communication systems. For example, the communication system may be a 3rd generation (3rd generation, 3G) communication system (for example, evolved universal terrestrial radio access (evolved universal terrestrial radio access, E-UTRA) and NR dual connectivity, or a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or a wireless local area network (wireless local area network, WLAN) system, a system integrating a plurality of kinds of systems, or a future communication system like a 6th generation (6th generation, 6G) communication system. The 5G communication system may also be referred to as a new radio (new radio, NR) system.

A network element in a communication system may send a signal to another network element or receive a signal from another network element. The signal may include information, data, or the like. The network element may also be referred to as an entity, a network entity, a device, a communication device, a communication module, a node, a communication node, or the like. In embodiments of this application, the network element is used as an example for description. For example, the communication system may include at least one terminal device and at least one network device. A signal sending network element may be a network device, and a signal receiving network element may be a terminal device; or a signal sending network element may be a terminal device, and a signal receiving network element may be a network device. In addition, it may be understood that, if the communication system includes a plurality of terminal devices, the plurality of terminal devices may also send signals to each other. In other words, both a signal sending network element and a signal receiving network element may be terminal devices.

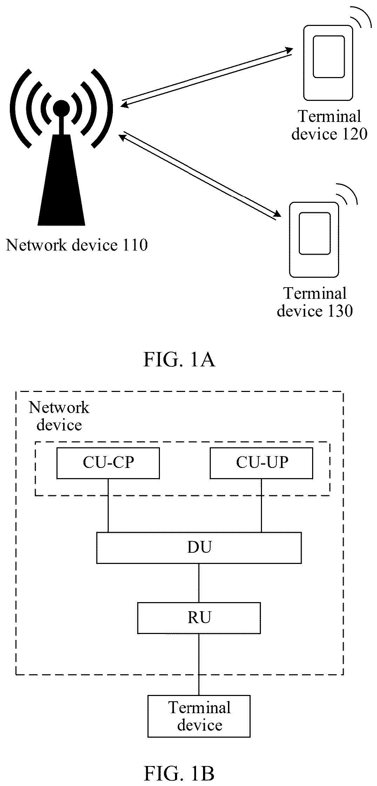

FIG. 1A shows a communication system 100. In an example, the communication system 100 includes a network device 110 and two terminal devices: a terminal device 120 and a terminal device 130. At least one of the terminal device 120 and the terminal device 130 may send uplink data to the network device 110, and the network device 110 may receive the uplink data. The network device may send downlink data to at least one of the terminal device 120 and the terminal device 130.

The following describes in detail the terminal devices and the network device in FIG. 1A.

The terminal device is also referred to as a terminal, user equipment (user equipment, UE), a mobile station (mobile station, MS), a mobile terminal (mobile terminal, MT), or the like, and is a device that provides a user with voice and/or data connectivity. The terminal device may communicate with one or more core network devices through the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Some examples of the terminal device are: a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal like a smart fueler in a smart city (smart city), a terminal device on a high-speed railway, and wireless terminals in a smart home (smart home), such as a smart speaker, a smart coffee machine, and a smart printer.

In embodiments of this application, a communication apparatus configured to implement a function of the terminal device may be a terminal device, may be a terminal device having some functions of the terminal, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the communication apparatus configured to implement the function of the terminal device is the terminal device or a UE is used for description.

In embodiments of this application, "sending information to... (a terminal device)" may be understood as that a destination end of the information is the terminal device, and may include directly or indirectly sending the information to the terminal device. "Receiving information from... (a terminal device)" may be understood as that a source end of the information is the terminal device, and may include directly or indirectly receiving the information from the terminal device. Information may undergo necessary processing, for example, a format change, between the source end for sending the information and the destination end. However, the destination end may understand valid information from the source end. A similar expression in this application may be understood similarly. Details are not described herein again.

The network device may be a base station (base station, BS), or the network device may be referred to as an access network device, an access node (access node, AN), or a radio access node (radio access node, RAN). The network device may be connected to a core network (for example, an LTE core network or a 5G core network), and the network device may provide a wireless access service for the terminal device. Some examples of the network device include but are not limited to at least one of the following: a next generation NodeB (generation NodeB, gNB) in 5G, a network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a transmission reception point (transmitting and receiving point, TRP), a transmission point (transmitting point, TP), and/or a mobile switching center. Alternatively, the network device may be a relay station, an access point, a vehicle-mounted device, a wearable device, a network device in a future evolved public land mobile network (public land mobile network, PLMN), or the like. The network device in embodiments of this application may be an integrated base station, or may be a base station including a central unit (central unit, CU) and/or a distributed unit (distributed unit, DU). The base station including the CU and the DU may also be referred to as a base station in which a CU and a DU are split from each other. For example, the base station includes a gNB-CU and a gNB-DU. The CU may be further split into a CU control plane (CU control plane, CU-CP) and a CU user plane (CU user plane, CU-CP). For example, the base station includes a gNB-CU-CP, a gNB-CU-UP, and a gNB-DU. Alternatively, the network device in embodiments of this application may be a radio unit (radio unit, RU). Alternatively, the network device in embodiments of this application may be of an open radio access network (open radio access network, O-RAN) architecture or the like. A specific deployment manner of the network device is not limited in embodiments of this application. For example, when the network device is of the O-RAN architecture, the network device shown in embodiments of this application may be an access network device in the O-RAN, for example, one or a combination of a CU, a DU, or an RU, or may be a module in the access network device. In an O-RAN system, a CU may also be referred to as an open (open, O)-CU, a CU-CP may also be referred to as an O-CU-CP, a CU-UP may also be referred to as an O-CU-UP, and an RU may also be referred to as an O-RU.

In embodiments of this application, a communication apparatus configured to implement a function of the network device may be a network device, may be an apparatus having some functions of the network device, or may be an apparatus that can support the network device in implementing the function, for example, a chip system. The apparatus may be installed in the network device. In embodiments of this application, the chip system may include a chip, or may include a chip and another discrete component. In the technical solutions provided in embodiments of this application, an example in which the communication apparatus configured to implement the function of the network device is the network device is used for description.

In embodiments of this application, "sending information to... (a network device)" may be understood as that a destination end of the information is the network device, and may include directly or indirectly sending the information to the network device. "Receiving information from... (a network device)" may be understood as that a source end of the information is the network device, and may include directly or indirectly receiving the information from the network device. Information may undergo necessary processing, for example, a format change, between the source end for sending the information and the destination end. However, the destination end may understand valid information from the source end. A similar expression in this application may be understood similarly. Details are not described herein again.

It should be understood that, a quantity and types of the devices in the communication system shown in FIG. 1A are merely used as an example, and embodiments of this application are not limited thereto. In actual application, the communication system may further include more terminal devices and more network devices, and may further include another network element, for example, may include a core network device, and/or a network management device like an operations, administration, and management (operations, administration, and maintenance, OAM) device.

The communication system and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Communication between the network device and the terminal device complies with a specified protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

FIG. 1B is a diagram of a radio access network RAN. A network device includes one or more CUs, one or more DUs, and one or more radio units (radio units, RUs). For clarity, FIG. 1B shows only one CU, one DU, and one RU. The CU is configured to be connected to a core network and the one or more DUs. Optionally, the CU may have some functions of the core network. The CU may include a CU-CP and a CU-UP.

The CU and the DU may be configured based on a function of a protocol layer of a wireless network implemented by the CU and the DU. For example, the CU is configured to implement functions of a PDCP layer and a protocol layer above the PDCP layer (for example, an RRC layer and/or an SDAP layer), and the DU is configured to implement a function of a protocol layer below the PDCP layer (for example, an RLC layer, a MAC layer, and/or a PHY layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. The network element configured to implement the control plane function in the core network may be an access and mobility function network element, for example, an access and mobility management function (access and mobility management function, AMF) network element in a 5G system. The AMF network element is configured to be responsible for mobility management in a mobile network, for example, location updating of a terminal device, network registration of the terminal device, and handover of the terminal device.

The CU-UP may perform interaction with a network element configured to implement a user plane function in the core network. The network element configured to implement the user plane function in the core network, for example, a user plane function (user plane function, UPF) network element in the 5G system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and a function of a protocol layer above the RLC layer are set on the CU, and remaining functions of the RLC layer and a function of a protocol layer below the RLC layer are set on the DU. For another example, division into functions of the CU or the DU may be performed based on service types or other system requirements. For example, division may be performed based on a delay. Functions whose processing time needs to meet a requirement for a small delay are set on the DU, and functions whose processing time does not need to meet the requirement for the delay are set on the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include some functions of the physical layer, and the some functions are closer to the MAC layer. The lower-layer function of the physical layer may include some other functions of the physical layer, and the some other functions are closer to an intermediate radio frequency side.

The following first explains and describes related terms in embodiments of this application. It should be noted that, these explanations are intended to make embodiments of this application easier to understand, but should not be construed as a limitation to the protection scope claimed in this application.

(1) Reference signal

The reference signal in embodiments of this application is used for downlink channel estimation, and mainly includes a downlink reference signal. Optionally, the reference signal may alternatively be described as a pilot signal.

For example, the downlink reference signal may include a channel state information reference signal (channel state information reference signal, CSI-RS), a synchronization signal block (synchronization signal/physical broadcast channel block, SSB), a tracking reference signal (tracking reference signal, TRS), or the like. An example of a specific application scenario is as follows:

In a frequency division duplex (frequency division duplex, FDD) communication scenario, because uplink and downlink channels do not have reciprocity or reciprocity between the uplink and downlink channels cannot be ensured, a network device usually delivers a CSI-RS to a terminal device, and the terminal device performs channel estimation based on the received CSI-RS, for example, obtains channel state information (channel state information, CSI) of a downlink channel through channel measurement and interference measurement estimation. The terminal device feeds back the CSI to the network device, so that the network device may determine, based on the CSI, configurations such as a resource, a modulation and coding scheme (modulation and coding scheme, MCS), and precoding for scheduling a downlink data channel of the terminal device. It may be understood that, the CSI is channel information, and is information that can indicate a channel feature or channel quality. The channel information may also be referred to as a channel response. For example, the CSI may be represented by a channel matrix, for example, the CSI includes the channel matrix; or the CSI may include a channel eigenvector.

For example, that the terminal device feeds back the CSI to the network device may include: The terminal device sends feedback quantities such as a rank indicator (rank indicator, RI), a channel quality indicator (channel quality indicator, CQI), and a precoding matrix indicator (precoding matrix indicator, PMI) to the network device. The RI indicates a quantity of downlink transport layers recommended by the terminal device, the CQI indicates a modulation and coding scheme that can be supported by a current channel condition determined by the terminal device, the PMI indicates precoding recommended by the terminal device, and a quantity of precoding layers indicated by the PMI corresponds to the RI.

(2) Hybrid beamforming (Hybrid beamforming, HBF)

In a communication system of a high frequency band, a base station (and terminals of some frequency bands) usually uses a large-scale array antenna (for example, 500 to 1000+ antenna elements), and a high array gain is used to resist a path loss caused by an increase of a frequency band, to improve a coverage capability. From a perspective of an implementation of the base station, a large array is also used, and array weighting manners used for different array scales in different frequency bands are different (that is, beamforming manners are different).

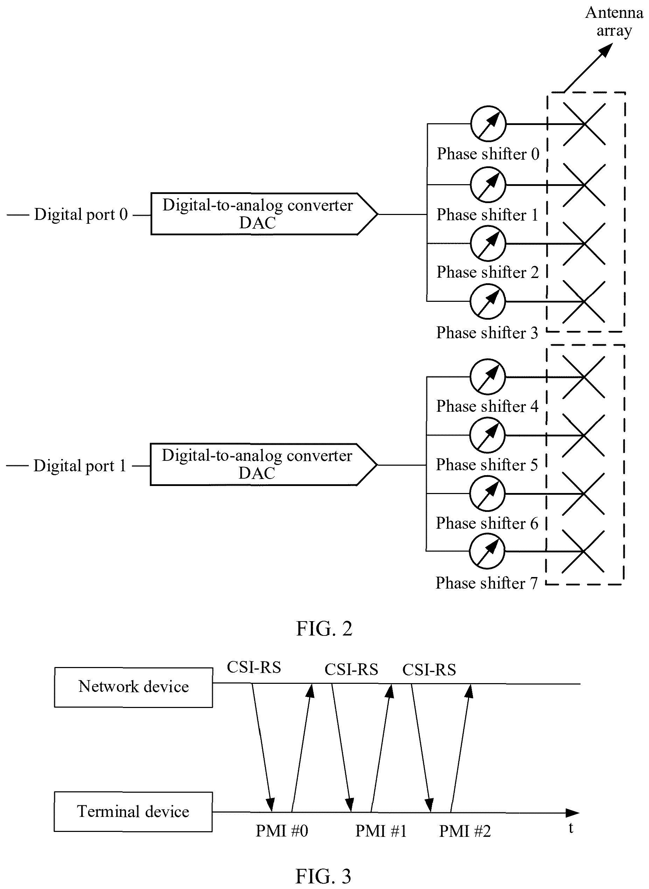

An HBF architecture includes a specific quantity of digital ports (or referred to as digital channels). One analog beam corresponds to one or more digital ports (or one digital port group). Each digital port may be connected to a plurality of antennas by using a digital-to-analog converter (digital-to-analog converter, DAC). For example, one antenna includes one analog phase shifter and one or more antenna array elements connected to the analog phase shifter. For example, FIG. 2 shows that one digital-to-analog converter DAC corresponds to one digital port, one DAC corresponds to four antennas, and one antenna corresponds to one phase shifter.

A proportional relationship between the digital port and the analog phase shifter in the HBF architecture may be configured according to different frequencies and system design requirements. This is not limited in embodiments of this application. For example, in a communication system of a high frequency band, a quantity of digital ports in the HBF is small, and a single digital port corresponds to many analog phase shifters. For example, generally, the quantity of digital ports in the HBF is configured as 4 to 16, and the single digital port may correspond to 16 to 512 analog phase shifters. In a communication system of a low frequency band, a quantity of digital ports in the HBF is large, and a single digital port corresponds to few analog phase shifters. Generally, the quantity of digital ports in the HBF is configured as 32 to 128, and the single digital port may correspond to 3 to 16 analog phase shifters.

(3) Antenna port and port group

The antenna port is a logical concept, and is usually associated with a reference signal. For example, it may be considered that the antenna port is a transceiver interface on a channel through which the reference signal passes. The antenna port may alternatively be described as a reference signal port. In an HBF architecture, one antenna port may correspond to one or more antennas (phase shifters).

The port group is a set including a plurality of antenna ports. In a possible design, a plurality of digital ports of a network device may be grouped to form a plurality of port groups. In another possible design, for example, in the HBF architecture, the port group includes antenna ports corresponding to antennas connected to a plurality of digital ports. The plurality of digital ports may be a plurality of digital ports corresponding to a same analog beam, and one port group corresponds to one analog beam. Alternatively, the plurality of digital ports may be digital ports corresponding to a plurality of analog beams, and one port group corresponds to a plurality of analog beams. For another example, in the HBF architecture, a plurality of digital ports corresponding to a same analog beam are divided into a plurality of subsets, each subset corresponds to one port group, one port group corresponds to one analog beam, and the port group includes an antenna port corresponding to an antenna connected to a digital port in the subset. Optionally, in the HBF architecture, the port group may alternatively be described as a digital-analog port group.

In the HBF architecture, when sending a CSI-RS, the network device selects different analog beams to send the CSI-RS in a time-sharing manner, and the different analog beams correspond to different resources. Correspondingly, a terminal device measures, based on a plurality of resources, the CSI-RS in a time-sharing manner and feeds back CSI. As shown in FIG. 3, after measuring a CSI-RS on a resource corresponding to an analog beam and feeding back CSI corresponding to the analog beam, the terminal device measures a CSI-RS on a resource corresponding to a next analog beam and feeds back CSI corresponding to the analog beam, and so on. In such a design, beam sweeping needs to be performed a plurality of times, and overheads are high. In addition, as the network device selects more analog beams, the terminal device needs to measure more CSI-RSs, and overheads for feeding back CSI are higher, increasing power consumption of the terminal device.

Based on this, an embodiment of this application provides a precoding matrix transmission method. A correlation between channel information of a plurality of analog beams is considered, and joint compression and feedback of the channel information of the plurality of analog beams are performed, so that a network device does not need to select a plurality of analog beams to deliver a reference signal in a time-sharing manner, and a terminal device does not need to feed back CSI in a time-sharing manner, thereby reducing overheads for beam sweeping and channel feedback and reducing power consumption of the terminal device. The following further describes in detail the precoding matrix transmission method provided in this embodiment of this application.

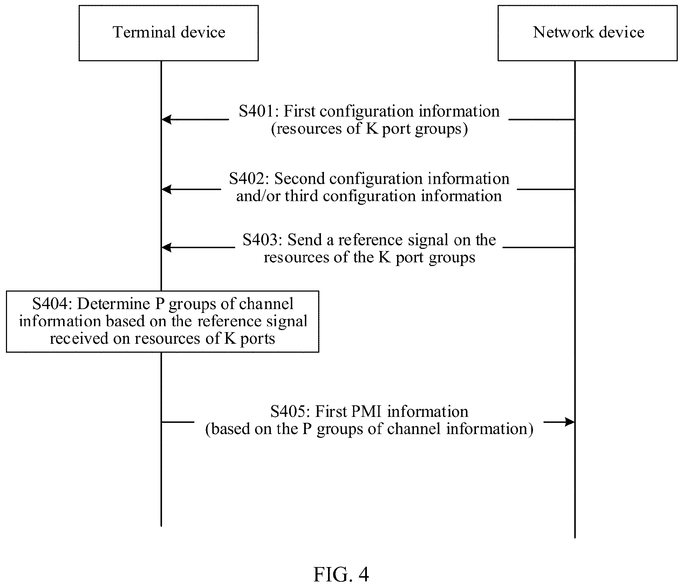

As shown in FIG. 4, the communication mainly includes the following steps. It may be understood that, the steps and an execution sequence shown in FIG. 4 are merely used as an example. During actual implementation, some of the steps may be performed, or other steps may be further performed. Similarly, the execution sequence of the steps may also be adjusted. This is not limited in embodiments of this application.

S401: A network device sends first configuration information to a terminal device.

Specifically, the first configuration information is for configuring resources of K port groups, and each of the K port groups includes a plurality of antenna ports. A plurality of antenna ports in one port group each have a corresponding resource. The first configuration information may include port group information corresponding to the K port groups and a resource corresponding to each antenna port.

Optionally, in a radio access network RAN shown in FIG. 1B, S401 may be implemented as follows: A CU-CP corresponding to the network device generates the first configuration information, and sends the first configuration information to the terminal device via a DU and an RU. In an O-RAN system, S401 may be implemented as follows: An O-CU-CP corresponding to the network device generates the first configuration information, and sends the first configuration information to the terminal device via an O-DU and an O-RU.

The following describes in detail some implementations of the port group information corresponding to the K port groups.

In a first optional implementation, the port group information may indicate a value of K, and a quantity of antenna ports included in a $k^{th}$ port group in the K port groups is $P_{CSI-RS,k}$, where a value of k is a positive integer from 1 to K. If k has different values, $P_{CSI-RS,k}$ may be the same or different. In addition, in an optional manner, if quantities of antenna ports included in the K port groups are the same, a quantity of antenna ports included in each of the K port groups may also be represented as $P'_{CSI-RS}$.

In a second optional implementation, the port group information may be implemented by using code division multiplexing information of a reference signal. To be specific, the code division multiplexing information of the reference signal may further indicate a distribution manner of the K port groups in addition to indicating a code division multiplexing manner on a resource of the reference signal.

The code division multiplexing manner includes frequency domain code division, time domain code division, and time-frequency domain code division. In this embodiment of this application, time-frequency domain code division is used as an example for description. The code division multiplexing information indicating time-frequency domain code division may be cdm#-FD#-TD#. "#" identifies a number, and represents that in one code division multiplexing (code division multiplexing, CDM) group, # ports are used for code division in frequency domain, and # ports are used for code division in time domain. For example, cdm4-FD2-TD2 represents that one CDM group has four antenna ports, where two antenna ports are used for code division in frequency domain, and two antenna ports are used for multiplexing in time domain. For example, a total quantity of antenna ports included in the K port groups is 16. The port group information in the first configuration information may include four CDM groups, that is, four pieces of code division multiplexing information cdm4-FD2-TD2. Four ports in each group occupy a same time-frequency resource, but are distinguished by orthogonal codes. In addition, the cdm4-FD2-TD2 may further indicate the distribution manner of the K port groups. "4" in cdm4 may represent that K=4, that is, there are four port groups, "2" in FD2 may represent that two of the four port groups are distributed in a vertical direction, and "2" in TD2 may represent that two of the four port groups are distributed in a horizontal direction. Alternatively, "4" in the cdm4 may represent that K=4, that is, there are the four port groups, "2" in the FD2 may represent that the two of the four port groups are distributed in the horizontal direction, and "2" in the TD2 may represent that the two of the four port groups are distributed in the vertical direction.

In a third optional implementation, the port group information may include a value of K and a total quantity of antenna ports, and each port group includes a same quantity of antenna ports. Correspondingly, the terminal device may determine, based on the value of K and the total quantity of antenna ports, the quantity of antenna ports included in each of the K port groups.

Further, based on the foregoing three manners, the port group information may further include information indicating a division manner of antenna ports in each port group.

For example, the port group information includes a coefficient $O_1$, representing that all antenna ports corresponding to the K port groups are numbered, and every $O_1$ consecutively numbered antenna ports correspond to one port group. For example, eight antenna ports are numbered 0 to 7. If $O_1=4$, the antenna ports 0 to 3 correspond to a first port group, and the antenna ports 4 to 7 are a second port group.

For example, the port group information includes a sampling coefficient $O_2$, representing that antenna ports with numbers at an interval of $O_2$ starting from a smallest number in all antenna ports corresponding to the K port groups correspond to one port group. For example, eight antenna ports are numbered 0 to 7. If $O_2=4$, {antenna port 0, antenna port 4} corresponds to one port group, {antenna port 1, antenna port 5} corresponds to one port group, {antenna port 2, antenna port 6} corresponds to one port group, and {antenna port 3, antenna port 7} corresponds to one port group.

For another example, the port group information includes information indicating even division, representing that antenna ports are evenly divided into the port groups in ascending order of numbers, that is, the port groups each include a same quantity of antenna ports. For example, in a scenario in which eight antenna ports are divided into two port groups, it is assumed that numbers of the eight antenna ports are p to p+7, and p is a constant configured by the network device or agreed on in a protocol. In this way, the antenna ports numbered p+0 to p+3 may be grouped into a port group 0, and the antenna ports numbered p+4 to p+7 may be grouped into a port group 1.

Optionally, that the network device configures, in the first configuration information, the resource corresponding to each antenna port may be implemented with reference to the following manner: For example, the first configuration information is implemented as radio resource control (radio resource control, RRC) signaling, and the network device may configure, for the terminal device by using a resource configuration (resourceConfig) in the RRC signaling, the resources of all the antenna ports corresponding to the K port groups. For example, the resourceConfig may include a resource set (resourceSet) corresponding to each of the K port groups, and a resource set corresponding to one port group may include an index (ID) of a resource (resource) of each antenna port in the port group. It may be understood that, the resource of the reference signal includes one or more of the following: a time domain resource, a frequency domain resource, a code domain resource, a space domain resource, and a transmission periodicity. In addition, optionally, the first configuration information may further indicate a type of the reference signal sent by the network device.

Optionally, the network device may further configure, for the terminal device by using the first configuration information, information for simulating more port groups. For example, the first configuration information is further for configuring Q groups of coefficients, the Q groups of coefficients are for simulating, by the terminal device, Q port groups based on the K port groups, and Q is an integer greater than K. The Q groups of coefficients may also be described as Q groups of weighting coefficients, Q groups of coefficient vectors, or Q groups of coefficient matrices.

In addition, optionally, the network device may further configure, by using the first configuration information, reporting content and a reporting manner for a measurement result of the reference signal. The measurement result of the reference signal may be channel information estimated based on the reference signal, for example, CSI estimated based on a CSI-RS. Reporting content for the CSI may include feedback quantities such as an RI, a CQI, and a PMI. A reporting manner for the CSI may indicate reporting time, a reporting periodicity, a format of the reporting content, and a quantity of groups of reported channel information.

S402: The network device sends second configuration information and/or third configuration information to the terminal device.

Specifically, the second configuration information may be for configuring a first codebook parameter combination and/or a quantity of first precoding matrices. The first codebook parameter combination and the quantity of first precoding matrices are for compressing channel information (for example, CSI) in frequency domain. For example, the first codebook parameter combination includes one or more of the following parameters: a quantity L of beams (or referred to as a quantity L of ports or a quantity L of bases), a factor $p_\upsilon$ of a quantity of vectors (or referred to as a factor $p_\upsilon$ of a quantity of bases, or an IDFT base selection ratio $p_\upsilon$), and a factor $\beta$ of a quantity of non-zero elements (or referred to as a non-zero element ratio $\beta$). IDFT is an inverse discrete Fourier transform (inverse discrete Fourier transform, IDFT) matrix. Optionally, the quantity of first precoding matrices corresponds to the quantity of groups of reported channel information.

Specifically, the third configuration information may be for configuring a second codebook parameter combination and/or a quantity of second precoding matrices. The second codebook parameter combination and the quantity of second precoding matrices are for compressing the channel information (for example, the CSI) in space domain. The second codebook parameter combination includes one or more of the following parameters: a first port dimension $N_1$ (or a first dimension $N_1$), a second port dimension $N_2$ (or a first dimension $N_2$), a first sampling coefficient $O_1$ (or a first coefficient $O_1$), and a second sampling coefficient $O_2$ (or a second coefficient $O_2$). Optionally, the first port dimension $N_1$ may be a horizontal dimension, and the second port dimension $N_2$ may be a vertical dimension. The quantity of second precoding matrices corresponds to the quantity of groups of reported channel information.

Optionally, in the radio access network RAN shown in FIG. 1B, S402 may be implemented as follows: The CU-CP corresponding to the network device generates the second configuration information and/or the third configuration information, and sends the second configuration information and/or the third configuration information to the terminal device by using the DU and the RU. In the O-RAN system, S402 may be implemented as follows: The O-CU-CP corresponding to the network device generates the second configuration information and/or the third configuration information, and sends the second configuration information and/or the third configuration information to the terminal device by using the O-DU and the O-RU.

In addition, it may be understood that, the network device may simultaneously send the first configuration information, and the second configuration information and/or the third configuration information by using one message/signaling; or the network device may send the first configuration information, and the second configuration information and/or the third configuration information by using different messages/signaling. This is not limited in embodiments of this application. S403: The network device sends the reference signal on the resources of the K port groups based on the first configuration information.

Specifically, the network device may send the reference signal, for example, a CSI-RS, on the resources of the K port groups based on the first configuration information described in S401.

Optionally, in the radio access network RAN shown in FIG. 1B, S403 may be implemented as follows: The DU corresponding to the network device sends the reference signal to the terminal device by using the RU. In the O-RAN system, S403 may be implemented as follows: The O-DU corresponding to the network device sends the reference signal to the terminal device by using the O-RU.

S404: The terminal device determines P groups of channel information based on the reference signal received on the resources of the K ports.

Specifically, the terminal device may measure, based on the first configuration information, the reference signal received on the resources of the K port groups, to obtain K groups of channel information. The K groups of channel information respectively correspond to the K port groups. For example, the K groups of channel information are in one-to-one correspondence with the K port groups.

In an optional implementation, when K is greater than 1, the P groups of channel information may be at least two groups of channel information in the foregoing K groups of channel information. In other words, P is an integer less than or equal to K but greater than 1. In another optional implementation, as described in S401, if the Q groups of coefficients are configured in the first configuration information, the terminal device may determine the Q groups of channel information based on the Q groups of coefficients and the K groups of channel information, to determine to report at least two groups of channel information in the Q groups of channel information. In other words, the P groups of channel information may be the at least two groups of channel information in the Q groups of channel information, and P is an integer less than or equal to Q but greater than 1.

For example, channel information of the K port groups is denoted as $A_0$, $A_1$, ... , $A_{K-1}$, where a dimension of $A_k$ is $N_{UE} \times P_{CSI-RS,k}$; and $N_{UE}$ is a quantity of receive antenna ports of the terminal device. The Q groups of coefficients are numbered from 0 to Q-1, m is an integer from 0 to Q-1, and a group of coefficients numbered m may be represented as $\varphi_m = [\varphi_{m,0}, \varphi_{m,1}, ... , \varphi_{m,K-1}]$. Based on this, a group of channel information numbered m in the Q groups of channel information may be represented as $H_m = \sum_{k=0}^{K-1} \varphi_{m,k} A_k$ . Such a design is applied to an HBF architecture, so that the network device can send fewer reference signals, and the terminal device simulates more channel information based on the weighting coefficients corresponding to the port groups, to reduce communication overheads. Optionally, the design may also be applied to a digital beamforming architecture and an analog beamforming architecture.

In an implementation, the Q groups of coefficients form a matrix (for example, each row represents a group of coefficients, or each column represents a group of coefficients). Further, the matrix may be a discrete Fourier transform (discrete Fourier transform, DFT) matrix, a Hadamard matrix, a Walsh matrix, an identity matrix, or any other unitary matrix.

In an implementation, a value of P is one of 1, 2, and 4.

In an implementation, the P groups of channel information are determined by index set information corresponding to the channel information, and the index set information indicates indexes of the P groups of channel information in the Q groups of channel information. For example, the index set information includes a group index set $\{i_0, i_1, ..., i_{P-1}\}$ corresponding to the P groups of channel information. When the P groups of channel information are selected in the K groups of channel information, $0 \leq i_p < K$, where $i_p$ is an integer. When the P groups of channel information are selected in the Q groups of channel information, $0 \leq i_p < Q$, where $i_p$ is an integer. p is an integer from 0 to P-1.

In addition, it may be understood that, the P groups of channel information are to-be-reported (fed-back) channel information. Optionally, the value of P (or the corresponding group index set) may be determined by the terminal device, or may be indicated by the network device to the terminal device. For example, the network device may indicate the value of P (or the corresponding group index set) in the second configuration information. Specifically, the value of P (or the corresponding group index set) may be the quantity of reported channel information included in the second configuration information described in S402.

S405: The terminal device sends first PMI information to the network device based on the P groups of channel information.

Specifically, S405 may be implemented in the following Manner (1) or Manner (2).

Manner (1) corresponds to a case in which the network device sends the second configuration information to the terminal device in S402. The terminal device may perform compression processing on the P groups of channel information in frequency domain based on the first codebook parameter combination in the second configuration information, to determine the first PMI information corresponding to the P groups of channel information, thereby implementing joint compression and feedback of a plurality of groups of channel information.

First, the terminal device may rearrange (or referred to as sorting) the P groups of channel information in frequency domain in the following arrangement manner. It may be understood that, the arrangement manner may be determined by the terminal device, or may be configured by the network device for the terminal device. If the terminal device determines the arrangement manner, the terminal device may further report a used arrangement manner to the network device when sending the first PMI information.

In an optional implementation, the terminal device may divide each of the P groups of channel information into a plurality of first precoding matrices in frequency domain, and the plurality of first precoding matrices corresponding to each group of channel information are distributed on different frequency domain resources (for example, sub-bands), so that frequency domain resources occupied by one of the P groups of channel information are non-contiguous. It may be understood that, one of a plurality of frequency domain resources may correspond to a first precoding matrix of each of the P groups of channel information, and a quantity of first precoding matrices corresponding to one frequency domain resource is P.

For example, channel information is CSI, and the foregoing frequency domain resource is a sub-band. The P groups of channel information may be denoted as CSI #0 to CSI #P-1, a quantity of sub-bands corresponding to CSI #p in the CSI #0 to the CSI #P-1 is denoted as $N_{3,p}$, and $N_{3,p}$ corresponding to p with different values is the same or different. When each of the P groups of channel information corresponds to a same quantity of sub-bands, the quantity of sub-bands corresponding to each group of channel information may be denoted as $N'_3$. The quantity of first precoding matrices corresponding to the P groups of channel information corresponds to a total quantity, $N_3 = \sum_{p=0}^{P-1} N_{3,p}$ of sub-bands corresponding to the P groups of channel information. When each of the P groups of channel information corresponds to the same quantity of sub-bands, the total quantity $N_3$ of sub-bands corresponding to the P groups of channel information is equal to $P \times N'_3$.

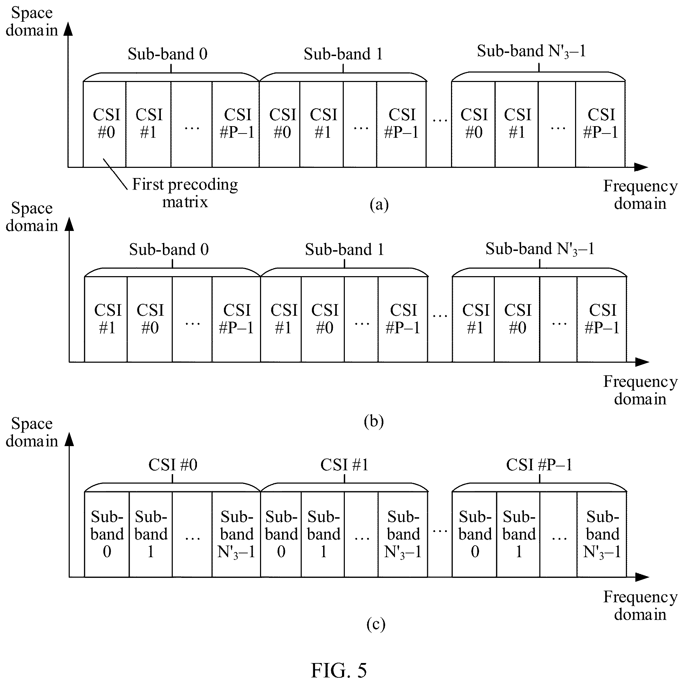

An $i^{th}$ first precoding matrix in the $N_3$ first precoding matrices is an $\lfloor i/P \rfloor^{th}$ precoding matrix in an (i mod P)$^{th}$ group of channel information in the P groups of channel information. mod represents a modulo operator, i is an integer from 1 to $N_3$, and $\lfloor \rfloor$ represents a rounding down operator. In (a) in FIG. 5, a rectangle represents a first precoding matrix, and the quantity of sub-bands corresponding to each of the P groups of channel information is $N'_3$, to show that P precoding matrices, that is, first precoding matrices corresponding to the CSI #0 to the CSI #P-1, are distributed on each of the $N'_3$ sub-bands. In addition, the first precoding matrices corresponding to the CSI #0 to the CSI #P-1 are arranged in ascending order of numbers of the CSI #0 to the CSI #P-1.

In addition, optionally, first precoding matrices corresponding to CSI #0 to CSI #P-1 on one sub-band may not be completely arranged in ascending order of numbers. As shown in (b) in FIG. 5, on one sub-band, CSI #1 is arranged before CSI #0, and subsequent CSI #2 to CSI #P-1 are arranged in ascending order of numbers.

It may be understood that, in this embodiment of this application, an example in which one sub-band corresponds to one precoding matrix in a same group of channel information is used for description. In actual application, one sub-band may also be set to correspond to a plurality of precoding matrices in a same group of channel information. This is not limited in embodiments of this application.

In another optional implementation, the P groups of channel information after arrangement occupy P frequency domain resources, and one of the P frequency domain resources may correspond to one of the P groups of channel information. Alternatively, it may be understood that, frequency domain resources occupied by one of the P groups of channel information are contiguous. For example, one sub-band may be configured for one group of channel information, and the $i^{th}$ first precoding matrix in the $N_3$ first precoding matrices corresponding to the P groups of channel information is an ($N_{3,p}$ mod P)$^{th}$ precoding matrix in an $\lfloor i/N_{3,p} \rfloor^{th}$ group of channel information in the P groups of channel information. For example, in (c) in FIG. 5, an example in which the quantity of sub-bands corresponding to each of the P groups of channel information (CSI #0 to CSI #P-1) is $N'_3$ is used, to show that in ascending order of numbers of the CSI #0 to the CSI #P-1, a sub-band 0 corresponds to the CSI #0, a sub-band 1 corresponds to the CSI #1, and so on, and a sub-band $N'_3$-1 corresponds to the CSI #P-1.

Further, the terminal device may perform compression processing on the P groups of channel information after arrangement based on the first codebook parameter set and the quantity of first precoding matrices, to obtain the first PMI information. The first codebook parameter set includes L, $p_\upsilon$, and $\beta$. A value of at least one parameter in the first codebook parameter set is related to the value of P.

Specifically, the first PMI information may be represented as a PMI matrix: $W = W_1 \times \widetilde{W}_2 \times W_f^H$ .

A dimension of W is $P'_{CSI-RS} \times \sum_{p=0}^{P-1} N_{3,p}$ ; a dimension of $W_1$ is $P'_{CSI-RS} \times 2L(P)$; a dimension of $\widetilde{W}_2 \times W_f^H$ is $2L(P) \times \sum_{p=0}^{P-1} N_{3,p}$ ; a dimension of $\tilde{W}_2$ is $2L(P) \times M(P)$; and a dimension of $W_f^H$ is $M(P) \times \sum_{p=0}^{P-1} N_{3,p}$ , and may be M(P) rows in an IDFT matrix with a dimension of $N_3 \times N_3$, or may be referred to as a conjugate of M(P) columns in a DFT matrix $W_f$ with a dimension of $\sum_{p=0}^{P-1} N_{3,p} \times \sum_{p=0}^{P-1} N_{3,p}$ . $P'_{CSI-RS}$ is a quantity of antenna ports corresponding to each of the P groups of channel information (CSI-RSs).

2L(P) is a functional relational expression, and represents that a value of L may be related to P. A dimension of a first precoding matrix shown in FIG. 5 is 2L(P) $\times$ 1. M(P) is a quantity of selected IDFT base vectors,

$$M(P) = \left\lceil p_\upsilon(P) \times \frac{\sum_{p=0}^{P-1} N_{3,p}}{R} \right\rceil$$ , $p_\upsilon(P)$ represents that a value of $p_\upsilon$ is related to P, and R represents a quantity of precoding matrices on each sub-band. For $\sum_{p=0}^{P-1} N_{3,p}$ , refer to the foregoing descriptions for understanding. Details are not described herein again.

It may be understood that, one first precoding matrix in each of the P groups of channel information may be represented by $\upsilon$ layers, where each layer corresponds to one precoding vector (or referred to as an equivalent PMI), and $\upsilon$ corresponds to a value of a rank.

Finally, when feeding back channel information, the terminal device needs to feed back only a port or DFT codebook information related to $W_1$, IDFT base selection information related to $W_f^H$ , and a non-zero element (for example, location information of the non-zero element, and an amplitude and a phase of the non-zero element) in $\tilde{W}_2$. It may be understood that, the first PMI information sent by the terminal device indicates the port or the DFT codebook information related to $W_1$, the IDFT base selection information related to $W_f^H$ , and the non-zero element in $\tilde{W}_2$.

For example, in this embodiment of this application, ranges of values of the parameters in the first codebook parameter set are shown in the following Table 1 to Table 5. Optionally, the network device may include a codebook parameter combination index in the second configuration information, to specifically indicate the values of the parameters in the first codebook parameter set. In addition, it may be understood that, when Table 1 to Table 5 are actually used, one row or several rows shown in the table, all rows in the table, or more rows than those shown in the table may be used. The following Table 1 to Table 5 are used as an example, and do not represent that descriptions of the first codebook parameter set in this embodiment of this application are limited to this example.

Table 1

| Codebook parameter combination index | L | $p_\upsilon$ | | $\beta$ |
|---|---|---|---|---|
| | | $\upsilon \in \{1, 2\}$ | $\upsilon \in \{3, 4\}$ | |
| 1 | L1(P) | X1(P) | Y1(P) | Z1(P) |
| 2 | L2 (P) | X2 (P) | Y2 (P) | Z2 (P) |
| 3 | L3(P) | X3 (P) | Y3 (P) | Z3 (P) |
| 4 | L4(P) | X4(P) | Y4(P) | Z4(P) |
| 5 | L5(P) | X5 (P) | Y5 (P) | Z5(P) |
| 6 | L6(P) | X6(P) | Y6(P) | Z6(P) |
| 7 | L7(P) | X7(P) | Y7(P) | Z7(P) |
| 8 | L8(P) | X8(P) | Y8(P) | Z8(P) |

Table 1 shows that the value of the at least one parameter in the first codebook parameter set is determined based on the value of P. The foregoing Lr(P) is a positive integer, for example, L1(P) = 2, 4, 6, 8, 10, 12, 16, P, 2P, 3P, 4P, 5P, 6P, 7P, or 8P, where r = 1, 2, ... , 8. The foregoing Xr(P), Yr(P), or Zr(P) is a non-negative real number and is less than 1. For example, if Xr(P), Yr(P) , or Zr(P) is less than or equal to 1/2, Xr(P) is used as an example: Xr(P) = 1/2, 1/4, 1/6, 1/8, 1/10, 1/12, 1/16, 1/P, 1/2P, 1/3P, 1/4P, 1/5P, 1/6P, 1/7P, or 1/8P. By using 2P as an example, 2P is a product of 2 and P. For descriptions of other same formats in Table 1 to Table 5, refer to the definition of 2P for understanding. Details are not described again in embodiments of this application.

Table 2

| Codebook parameter combination index | $L$ | $p_\upsilon$ | | $\beta$ |
|---|---|---|---|---|
| | | $\upsilon \in \{1, 2\}$ | $\upsilon \in \{3, 4\}$ | |
| 1 | 2P | 1/4 | 1/8 | 1/4 |
| 2 | 2P | 1/4 | 1/8 | 1/4 |
| 3 | 4P | 1/4 | 1/8 | 1/4 |
| 4 | 4P | 1/4 | 1/8 | 1/2 |
| 5 | 4P | 1/4 | 1/4 | 3/4 |
| 6 | 4P | 1/2 | 1/4 | 1/2 |
| 7 | 6P | 1/4 | - | 1/2 |
| 8 | 6P | 1/4 | - | 3/4 |

Table 2 shows that the value of the parameter L in the first codebook parameter set is determined based on the value of P.

Table 3

| Codebook parameter combination index | $L$ | $p_\upsilon$ | | $\beta$ |
|---|---|---|---|---|
| | | $\upsilon \in \{1, 2\}$ | v E {3, 4} | |
| 1 | 2 | 1/4 | 1/8 | 1/4P |
| 2 | 2 | 1/4 | 1/8 | 1/2P |
| 3 | 4 | 1/4 | 1/8 | 1/4P |
| 4 | 4 | 1/4 | 1/8 | 1/2P |
| 5 | 4 | 1/4 | 1/4 | 3/4P |
| 6 | 4 | 1/2 | 1/4 | 1/2P |
| 7 | 6 | 1/4 | - | 1/2P |
| 8 | 6 | 1/4 | - | 3/4P |

Table 3 shows that the value of the parameter $\beta$ in the first codebook parameter set is determined based on the value of P.

Table 4

| Codebook parameter combination index | $L$ | $p_\upsilon$ | | $\beta$ |
|---|---|---|---|---|
| | | $\upsilon$ E {1, 2} | $\upsilon \in \{3, 4\}$ | |
| 1 | 2 | 1/4P | 1/8P | 1/4 |
| 2 | 2 | 1/4P | 1/8P | 1/4 |
| 3 | 4 | 1/4P | 1/8P | 1/4 |
| 4 | 4 | 1/4P | 1/8P | 1/2 |
| 5 | 4 | 1/4P | 1/4P | 3/4 |
| 6 | 4 | 1/2P | 1/4P | 1/2 |
| 7 | 6 | 1/4P | - | 1/2 |

(continued)

| Codebook parameter combination index | L | $p_\upsilon$ | | $\beta$ |
|---|---|---|---|---|
| | | $\upsilon \in \{1, 2\}$ | $\upsilon \in \{3, 4\}$ | |
| 8 | 6 | 1/4P | - | 3/4 |

Table 4 shows that the value of the parameter $p_\upsilon$ in the first codebook parameter set is determined based on the value of P.

Table 5

| Codebook parameter combination index | L | $p_\upsilon$ | | $\beta$ |
|---|---|---|---|---|
| | | $\upsilon \in \{1, 2\}$ | $\upsilon \in \{3, 4\}$ | |
| 1 | 2P | 1/4P | 1/8P | 1/4P |
| 2 | 2P | 1/4P | 1/8P | 1/2P |
| 3 | 4P | 1/4P | 1/8P | 1/4P |
| 4 | 4P | 1/4P | 1/8P | 1/2P |
| 5 | 4P | 1/4P | 1/4P | 3/4P |
| 6 | 4P | 1/2P | 1/4P | 1/2P |
| 7 | 6P | 1/4P | - | 1/2P |
| 8 | 6P | 1/4P | - | 3/4P |

Table 5 shows that the values of all the parameters in the first codebook parameter set are determined based on the value of P. In addition, the configuration in Table 5 may be applied to a case in which P=K.

Manner (2) corresponds to a case in which the network device sends the third configuration information to the terminal device in S402. The terminal device may perform compression processing on the P groups of channel information in space domain based on the second codebook parameter combination in the third configuration information, to determine the first PMI information corresponding to the P groups of channel information, thereby implementing joint compression and feedback of a plurality of groups of channel information.

First, the terminal device may rearrange (or referred to as sorting) the P groups of channel information in space domain in the following arrangement manner. It may be understood that, the arrangement manner may be determined by the terminal device, or may be configured by the network device for the terminal device. If the terminal device determines the arrangement manner, the terminal device may further report a used arrangement manner to the network device when sending the first PMI information.

In an optional implementation, the terminal device may divide each of the P groups of channel information into a plurality of second precoding matrices in frequency domain, and the plurality of second precoding matrices corresponding to each group of channel information are distributed on different space domain resources (for example, antenna ports), so that space domain resources occupied by one of the P groups of channel information are non-contiguous. It may be understood that, one of a plurality of space domain resources may correspond to a second precoding matrix of each of the P groups of channel information, and a quantity of second precoding matrices corresponding to one space domain resource is P.

For example, channel information is CSI, and the foregoing space domain resource is an antenna port (hereinafter referred to as a port). The P groups of channel information are denoted as CSI #0 to CSI #P-1, a quantity of ports corresponding to CSI #p in the CSI #0 to the CSI #P-1 is denoted as $P_{CSI-RS,p}$, and $P_{CSI-RS,p}$ corresponding to p with different values is the same or different. When each of the P groups of channel information corresponds to a same quantity of ports, the quantity of ports corresponding to each group of channel information may be denoted as $P'_{CSI-RS}$. The quantity of second precoding matrices corresponding to the P groups of channel information corresponds to a total quantity,

$$P_{CSI-RS} = \sum_{p=0}^{P-1} P_{CSI-RS,p}$$ , of ports corresponding to the P groups of channel information. When each of the P groups of channel information corresponds to the same quantity of ports, the total quantity $P_{CSI-RS}$ of ports corresponding to the P groups of channel information is equal to $P \times P'_{CSI-RS}$.

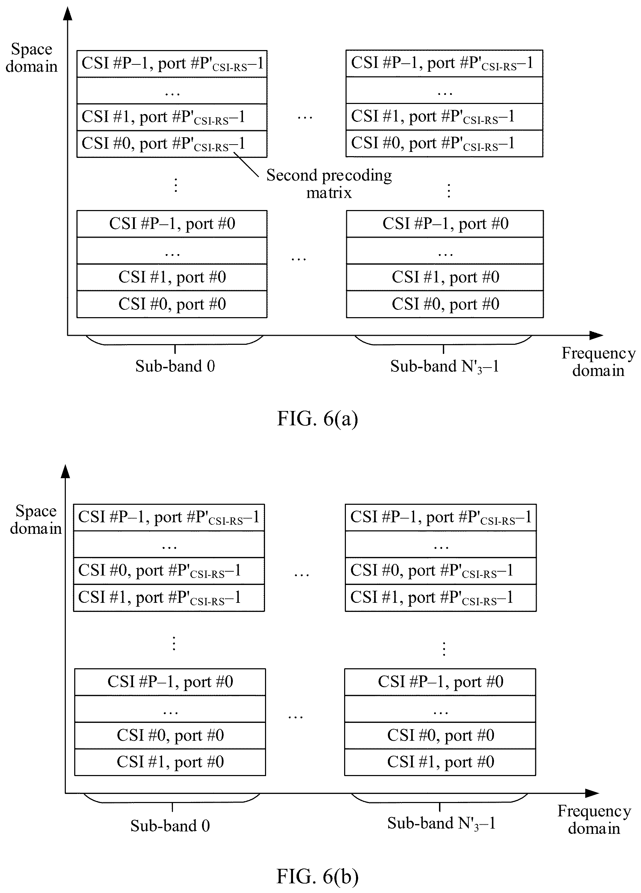

A $j^{th}$ second precoding matrix in the $P_{CSI-RS}$ second precoding matrices is a $\lfloor j/P \rfloor^{th}$ precoding matrix in a (j mod P)$^{th}$ group of channel information in the P groups of channel information. mod represents a modulo operator, j is an integer from 1 to $P_{CSI-RS}$, and $\llcorner \lrcorner$ represents a rounding down operator. In FIG. 6(a), a rectangle represents a second precoding matrix, and the quantity of ports corresponding to each of the P groups of channel information is $P'_{CSI-RS}$, to show that P precoding matrices, that is, second precoding matrices corresponding to the CSI #0 to the CSI #P-1, are distributed on each of the $P'_{CSI-RS}$ ports. In addition, the second precoding matrices corresponding to the CSI #0 to the CSI #P-1 are arranged in ascending order of numbers of the CSI #0 to the CSI #P-1.

In addition, optionally, second precoding matrices corresponding to CSI #0 to CSI #P-1 on one port may not be completely arranged in ascending order of numbers. As shown in FIG. 6(b), on one port, CSI #1 is arranged before CSI #0, and subsequent CSI #2 to CSI #P-1 are arranged in ascending order of numbers.

It may be understood that, in this embodiment of this application, an example in which one port corresponds to one precoding matrix in a same group of channel information is used for description. In actual application, one port may also be set to correspond to a plurality of precoding matrices in a same group of channel information. This is not limited in embodiments of this application.

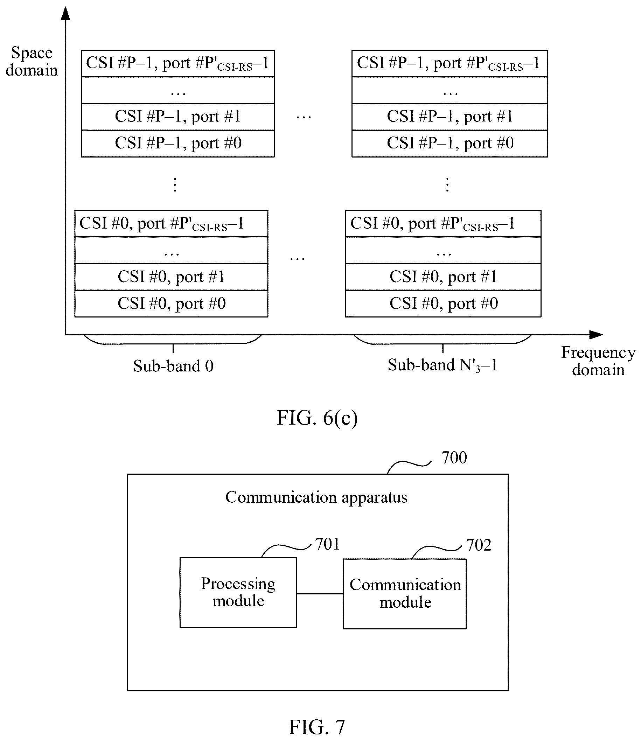

In another optional implementation, the P groups of channel information after arrangement occupy P space domain resources, and one of the P space domain resources may correspond to one of the P groups of channel information. Alternatively, it may be understood that, space domain resources occupied by one of the P groups of channel information are contiguous. For example, one port may be configured for one group of channel information, and the $j^{th}$ second precoding matrix in the $P_{CSI-RS}$ second precoding matrices corresponding to the P groups of channel information is a $(P_{CSI-RS,p} \bmod P)^{th}$ precoding matrix in a $\left\lfloor j/P_{CSI-RS,p} \right\rfloor^{th}$ group of channel information in the P groups of channel information. For example, in FIG. 6(c), an example in which the quantity of ports corresponding to each of the P groups of channel information (CSI #0 to CSI #P-1) is $P'_{CSI-RS}$ is used, to show that in ascending order of numbers of the CSI #0 to the CSI #P-1, a port 0 corresponds to the CSI #0, a port 1 corresponds to the CSI #1, and so on, and a port $P'_{CSI-RS}$-1 corresponds to the CSI #P-1.

Further, the terminal device may perform compression processing on the P groups of channel information after arrangement based on the second codebook parameter set and the quantity of second precoding matrices, to obtain the first PMI information. The second codebook parameter set includes $N_1$, $N_2$, $O_1$, and $O_2$. A value of at least one element in the second codebook parameter set is related to the value of P.

Specifically, the first PMI information may be represented as a PMI matrix: $W = W_1 \times \widetilde{W}_2 \times W_f^H$ .

A dimension of W is $\sum_{p=0}^{P-1} P_{CSI-RS,p} \times N'_3$ ; a dimension of $W_1$ is $\sum_{p=0}^{P-1} P_{CSI-RS,p} \times 2L(P)$ ; a dimension of $\widetilde{W}_2 \times W_f^H$ is $2L(P) \times N'_3$; a dimension of $\widetilde{W}_2$ is $2L(P) \times M(P)$; and a dimension of $W_f^H$ is $M(P) \times N'_3$, and may be $M(P)$ rows in an IDFT matrix with a dimension of $N'_3 \times N'_3$, or may be referred to as a conjugate of $M(P)$ columns in a DFT matrix $W_f$ with a dimension of $N'_3 \times N'_3$. $N'_3$ is a quantity of sub-bands corresponding to each of the P groups of channel information (CSI-RSs).

$2L(P)$ is a functional relational expression, and represents that a value of L may be related to P. A dimension of a second precoding matrix shown in FIG. 6(a) to FIG. 6(c) is $2L(P) \times 1$. $M(P)$ is a quantity of selected IDFT base vectors, $M(P) = \left\lceil p_\upsilon(P) \times \frac{N'_3}{R} \right\rceil$ , and $p_\upsilon(P)$ represents that a value of $p_\upsilon$ is related to P.

Some specific implementation examples related to $W_1$ are as follows: For example, $W_1$ is $2L(P)$ columns in a DFT matrix with a dimension of $\sum_{p=0}^{P-1} P_{CSI-RS,p} \times \sum_{p=0}^{P-1} P_{CSI-RS,p}$ ; $W_1$ is $2L(P)$ columns in an IDFT matrix with a dimension of $\sum_{p=0}^{P-1} P_{CSI-RS,p} \times \sum_{p=0}^{P-1} P_{CSI-RS,p}$; $W_1$ is $2L(P)$ columns in a Hadamard matrix with a dimension of $\sum_{p=0}^{P-1} P_{CSI-RS,p} \times \sum_{p=0}^{P-1} P_{CSI-RS,p}$ ; a quantity of antenna ports corresponding to each of the P groups of channel information is $P'_{CSI-RS}$, and $W_1$ is $2L(P)$ columns in an oversampling matrix with a dimension of $P'_{CSI-RS} \times P \times P'_{CSI-RS} \times P$, where the oversampling matrix is obtained by oversampling a DFT matrix of $P'_{CSI-RS} \times P'_{CSI-RS}$ P times; or the quantity of antenna ports corresponding to each of the P groups of channel information is $P'_{CSI-RS}$, and $W_1$ is $2L(P)$ columns in an oversampling matrix with a dimension of $P'_{CSI-RS} \times P \times P'_{CSI-RS} \times P$, where the oversampling matrix is obtained by oversampling an IDFT matrix of $P'_{CSI-RS} \times P'_{CSI-RS}$ P times. In addition, optionally, $W_1$ may be a matrix preconfigured in the terminal device. Such a design helps reduce overheads for feeding back the PMI.

Finally, when feeding back channel information, the terminal device needs to feed back only a port or DFT codebook information related to $W_1$, IDFT base selection information related to $W_f^H$ , and a non-zero element (for example, location information of the non-zero element, and an amplitude and a phase of the non-zero element) in $\widetilde{W}_2$. It may be understood that, the first PMI information sent by the terminal device indicates the port or the DFT codebook

information related to $W_1$, the IDFT base selection information related to $W_f^H$, and the non-zero element in $\tilde{W}_2$.

For example, in this embodiment of this application, ranges of values of the parameters in the second codebook parameter set are shown in the following Table 6 to Table 10. Optionally, the network device may include a quantity of antenna ports in the third configuration information, to specifically indicate the values of the parameters in the second codebook parameter set. In addition, it may be understood that, when Table 6 to Table 10 are actually used, one row or several rows shown in the table, all rows in the table, or more rows than those shown in the table may be used. The following Table 6 to Table 10 are used as an example, and do not represent that descriptions of the second codebook parameter set in this embodiment of this application are limited to this example.

Table 6

| Quantity of antenna ports | $(N_1, N_2)$ | $(O_1, O_2)$ |
|---|---|---|
| 4 | (A1(P), B1(P)) | (C1(P), D1(P)) |
| 8 | (A2(P), B2(P)) | (C2(P), D2(P)) |
|  | (A3(P), B3(P)) | (C3(P), D3(P)) |
| 12 | (A4(P), B4(P)) | (C4(P), D4(P)) |
|  | (A5(P), B5(P)) | (C5(P), D5(P)) |
| 16 | (A6(P), B6(P)) | (C6(P), D6(P)) |
|  | (A7(P), B7(P)) | (C7(P), D7(P)) |
| 24 | (A8(P), B8(P)) | (C8(P), D8(P)) |
|  | (A9(P), B9(P)) | (C9(P), D9(P)) |
|  | (A10(P), B10(P)) | (C10(P), D10(P)) |
| 32 | (A11(P), B11(P)) | (C11(P), D11(P)) |
|  | (A12(P), B12(P)) | (C12(P), D12(P)) |
|  | (A13(P), B13(P)) | (C13(P), D13(P)) |

Table 6 shows that the value of the at least one parameter in the second codebook parameter set is determined based on the value of P. The foregoing As(P), Bs(P), Cs(P), or Ds(P) is a positive integer, where s = 1, 2, ... , 13.

For example, As(P) = 2, 3, 6, 8, 12, 16, 2P, 3P, 6P, 8P, 12P, or 16P ; Bs(P) = 1, 2, 3, 4, P, 2P, 3P, or 4P; Cs(P) = 4 or 4P; and Ds(P) = 1, 4, P, or 4P. By using 2P as an example, 2P is a product of 2 and P. For descriptions of other same formats in Table 6 to Table 10, refer to the definition of 2P for understanding. Details are not described again in embodiments of this application.

Table 7

| Quantity of antenna ports | $(N_1, N_2)$ | $(O_1, O_2)$ |
|---|---|---|
| 4 | (2P, 1) | (4, 1) |
| 8 | (2P, 2) | (4, 4) |
|  | (4P, 1) | (4, 1) |
| 12 | (3P, 2) | (4, 4) |
|  | (6P, 1) | (4, 1) |
| 16 | (4P, 2) | (4, 4) |
|  | (8P, 1) | (4, 1) |
| 24 | (4P, 3) | (4, 4) |
|  | (6P, 2) | (4, 4) |
|  | (12P, 1) | (4, 1) |

(continued)

| Quantity of antenna ports | $(N_1, N_2)$ | $(O_1, O_2)$ |
|---|---|---|
| 32 | (4P, 4) | (4, 4) |
| | (8P, 2) | (4, 4) |
| | (16P, 1) | (4, 1) |

Table 7 shows that the value of the parameter $N_1$ in the second codebook parameter set is determined based on the value of P.

Table 8

| Quantity of antenna ports | $(N_1, N_2)$ | $(O_1, O_2)$ |
|---|---|---|
| 4 | (2, 1P) | (4, 1) |
| 8 | (2, 2P) | (4, 4) |
| | (4, 1P) | (4, 1) |
| 12 | (3, 2P) | (4, 4) |
| | (6, 1P) | (4, 1) |
| 16 | (4, 2P) | (4, 4) |
| | (8, 1P) | (4, 1) |
| 24 | (4, 3P) | (4, 4) |
| | (6, 2P) | (4, 4) |
| | (12, 1P) | (4, 1) |
| 32 | (4, 4P) | (4, 4) |
| | (8, 2P) | (4, 4) |
| | (16, 1P) | (4, 1) |

Table 8 shows that the value of the parameter $N_2$ in the second codebook parameter set is determined based on the value of P.

Table 9

| Quantity of antenna ports | $(N_1, N_2)$ | $(O_1, O_2)$ |
|---|---|---|
| 4 | (2, 1) | (4P, 1) |
| 8 | (2, 2) | (4P, 4) |
| | (4, 1) | (4P, 1) |
| 12 | (3, 2) | (4P, 4) |
| | (6, 1) | (4P, 1) |
| 16 | (4, 2) | (4P, 4) |
| | (8, 1) | (4P, 1) |
| 24 | (4, 3) | (4P, 4) |
| | (6, 2) | (4P, 4) |
| | (12, 1) | (4P, 1) |
| 32 | (4, 4) | (4P, 4) |
| | (8, 2) | (4P, 4) |
| | (16, 1) | (4P, 1) |

Table 9 shows that the value of the parameter $O_1$ in the second codebook parameter set is determined based on the value of P.

Table 10

| Quantity of antenna ports | $(N_1, N_2)$ | $(O_1, O_2)$ |
|---|---|---|
| 4 | (2, 1) | (4, 1P) |
| 8 | (2, 2) | (4, 4P) |
| | (4, 1) | (4, 1P) |
| 12 | (3, 2) | (4, 4P) |
| | (6, 1) | (4, 1P) |
| 16 | (4, 2) | (4, 4P) |
| | (8, 1) | (4, 1P) |
| 24 | (4, 3) | (4, 4P) |
| | (6, 2) | (4, 4P) |
| | (12, 1) | (4, 1P) |
| 32 | (4, 4) | (4, 4P) |
| | (8, 2) | (4, 4P) |
| | (16, 1) | (4, 1P) |

Table 10 shows that the value of the parameter $O_2$ in the second codebook parameter set is determined based on the value of P.

In addition, optionally, the terminal device may further report, to the network device, one or more pieces of the following information: an index of one or more resources corresponding to the measured reference signal, an index of one or more resource groups corresponding to the measured reference signal, an index of one or more antenna ports corresponding to the measured reference signal, P (groups of) channel quality indicators (channel quality indicators, CQIs), and P (groups of) reference signal received signal quality (reference signal received power, RSRP).

According to the method provided in this embodiment of this application, a plurality of groups of channel information can be fed back simultaneously, and precoding compression is performed in frequency domain or space domain by using a codebook parameter, to reduce overheads for feeding back the channel information and reduce power consumption of the terminal device.

It should be understood that, after S405, the network device may determine at least one of the P groups of channel information based on the first PMI information; and then the network device may further select one group of channel information in the determined at least one group of channel information, and transmit downlink data based on a port group corresponding to the group of channel information and the group of channel information.

Based on a same concept, refer to FIG. 7. An embodiment of this application provides a communication apparatus 700. The communication apparatus 700 includes a processing module 701 and a communication module 702. The communication apparatus 700 may be a terminal device, or may be a communication apparatus that is used in the terminal device or used in matching with the terminal device and that can implement the precoding matrix transmission method performed by a terminal device side. Alternatively, the communication apparatus 700 may be a network device, or may be a communication apparatus that is used in the network device or used in matching with the network device and that can implement the precoding matrix transmission method performed by the network device.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device side or a network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 700 is used in the terminal device, the processing module 701 may be configured to implement a processing function of the terminal device in the example in FIG. 4, and the communication module 702 may be configured to implement receiving and sending functions of the terminal device in the example in FIG. 4. Optionally, the communication apparatus may alternatively be understood with reference to the third aspect and the possible designs in the third aspect in the summary.

When the communication apparatus 700 is used on the network device side, the processing module 701 may be configured to implement a processing function of the network device in the example in FIG. 4, and the communication module 702 may be configured to implement receiving and sending functions of the network device in the example in FIG. 4. Optionally, the communication apparatus may alternatively be understood with reference to the fourth aspect and the possible designs in the fourth aspect in the summary.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

In this embodiment of this application, module division is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

Based on a same technical concept, an embodiment of this application further provides a communication apparatus 800. For example, the communication apparatus 800 may be a chip or a chip system. Optionally, in embodiments of this application, the chip system may include a chip, or may include a chip and another discrete component.

The communication apparatus 800 may be configured to implement a function of any network element in the communication system described in the foregoing example. The communication apparatus 800 may include at least one processor 810. Optionally, the processor 810 is coupled to a memory. The memory may be located in the apparatus; the memory may be integrated with the processor; or the memory may be located outside the apparatus. For example, the communication apparatus 800 may further include at least one memory 820. The memory 820 stores a computer program, a computer program or instructions, and/or data that are/is necessary for implementing any one of the foregoing examples. The processor 810 may execute the computer program stored in the memory 820, to perform the method in any one of the foregoing examples.

The communication apparatus 800 may further include a communication interface 830. The communication apparatus 800 may perform information interaction with another device through the communication interface 830. For example, the communication interface 830 may be a transceiver, a circuit, a bus, a module, a pin, or another type of communication interface. When the communication apparatus 800 is a chip-type apparatus or circuit, the communication interface 830 in the apparatus 800 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be an indirect coupling or a communication connection between apparatuses, units, or modules in an electrical form, a mechanical form, or another form, and is used for information interaction between the apparatuses, the units, or the modules. The processor 810 may operate cooperatively with the memory 820 and the communication interface 830. A specific connection medium between the processor 810, the memory 820, and the communication interface 830 is not limited in embodiments of this application.

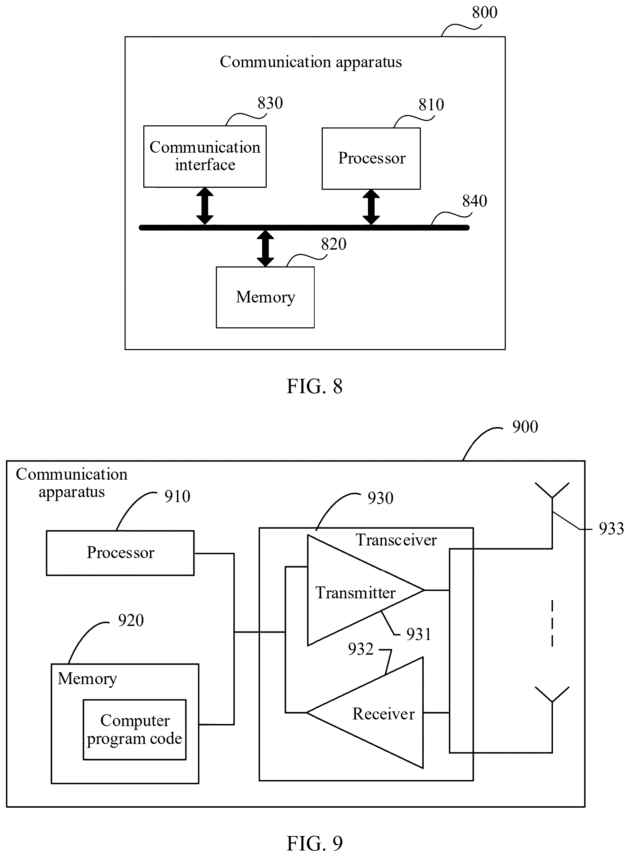

Optionally, with reference to FIG. 8, the processor 810, the memory 820, and the communication interface 830 are connected to each other through a bus 840. The bus 840 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic component, a discrete gate or transistor logic component, or a discrete hardware component, and may implement or perform the methods, steps, and logical block diagrams in embodiments of this application. The general-purpose processor may be a microprocessor, any conventional processor, or the like. The steps of the method in embodiments of this application may be directly completed by a hardware processor, or may be completed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 800 may be used in a terminal device. Specifically, the communication apparatus 800 may be the terminal device, or may be an apparatus that can support the terminal device in implementing a function of the terminal device in any one of the foregoing examples. The memory 820 stores a computer program (or instructions) and/or data for implementing the function of the terminal device in any one of the foregoing examples. The processor 810 may execute the computer program stored in the memory 820, to implement the method performed by the terminal device in any one of the foregoing examples. For example, when the communication apparatus is used in the terminal device, the communication interface in the communication apparatus 800 may be configured to perform interaction with a network device, and send information to the network device or receive information from the network device.

In another possible implementation, the communication apparatus 800 may be used in a network device. Specifically, the communication apparatus 800 may be the network device, or may be an apparatus that can support the network device in implementing a function of the network device in any one of the foregoing examples. The memory 820 stores a computer program (or instructions) and/or data for implementing the function of the network device in any one of the foregoing examples. The processor 810 may execute the computer program stored in the memory 820, to implement the method performed by the network device in any one of the foregoing examples. For example, when the communication apparatus is used in the network device, the communication interface in the communication apparatus 800 may be configured to perform interaction with a terminal device, and send information to the terminal device or receive information from the terminal device.

The communication apparatus 800 provided in this example may be used in the network device to complete the method performed by a cell on a network device side, or may be used in the terminal device to complete the method performed by the terminal device. Therefore, for technical effects that can be achieved by the communication apparatus 800, refer to the foregoing method examples. Details are not described herein again.

Based on a same technical concept, an embodiment of this application further provides a communication apparatus 900. As shown in FIG. 9, the communication apparatus 900 may be a terminal device, a processor of the terminal device, or a chip. The communication apparatus 900 may be configured to perform operations performed by the terminal device in the foregoing method embodiment.

When the communication apparatus 900 is the terminal device, FIG. 9 is a simplified diagram of a structure of the terminal device. As shown in FIG. 9, the terminal device includes a processor, a memory, and a transceiver. The memory may store computer program code. The transceiver includes a transmitter 931, a receiver 932, a radio frequency circuit (not shown in the figure), an antenna 933, and an input/output apparatus (not shown in the figure).

The processor is mainly configured to process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that, some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver module of the terminal device, and the processor that has a processing function may be considered as a processing module of the terminal device.

As shown in FIG. 9, the terminal device includes a processor 910, a memory 920, and a transceiver 930. The processor 910 may also be referred to as a processing unit, a processing board, a processing module, a processing apparatus, or the like. The transceiver 930 may also be referred to as a transceiver unit, a transceiver machine, a transceiver apparatus, or the like.

Optionally, in the transceiver 930, a component configured to implement a receiving function may be considered as a receiving module, and a component configured to implement a sending function may be considered as a sending module. In other words, the transceiver 930 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter may also be sometimes referred to as a transmitter, a transmitting module, a transmitter circuit, or the like.

For example, the processor 910 is configured to perform a processing action of a terminal device side in the embodiment shown in FIG. 4, and the transceiver 930 is configured to perform receiving and sending actions of the terminal device side in FIG. 4.

It should be understood that, FIG. 9 is merely an example rather than a limitation, and the terminal device including the transceiver module and the processing module may not rely on the structure shown in FIG. 9.

When the communication apparatus 900 is the chip, the chip includes a processor and a transceiver. The transceiver may be an input/output circuit or a communication interface. The processor may be a processing module, a microprocessor, or an integrated circuit integrated on the chip. A sending operation performed by the terminal device in the foregoing method embodiment may be understood as an output of the chip, and a receiving operation performed by the terminal device in the foregoing method embodiment may be understood as an input of the chip.

Based on a same technical concept, an embodiment of this application further provides a communication apparatus 1000. The communication apparatus 1000 may be a network device or a chip. The communication apparatus 1000 may be configured to perform operations performed by the network device in the foregoing method embodiment.

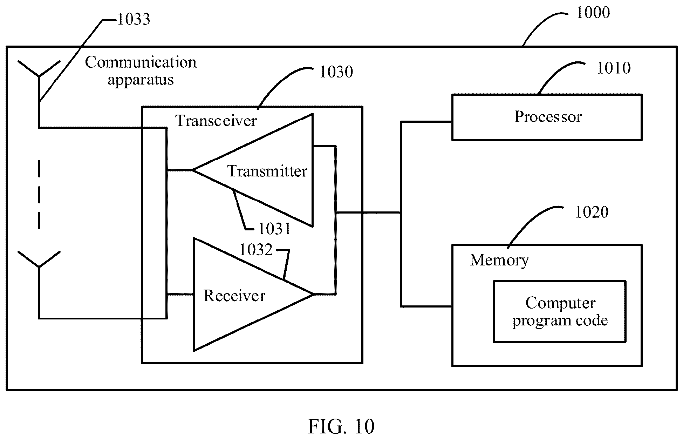

When the communication apparatus 1000 is the network device, for example, a base station, FIG. 10 is a simplified diagram of a structure of the base station. The base station includes a part 1010, a part 1020, and a part 1030. The part 1010 is mainly configured to perform baseband processing, control the base station, and the like. The part 1010 is usually a control center of the base station, may be usually referred to as a processor, and is configured to control the base station to perform a processing operation on a network device side in the foregoing method embodiment. The part 1020 is mainly configured to store computer program code and data. The part 1030 is mainly configured to receive and send a radio frequency signal, and perform conversion between the radio frequency signal and a baseband signal. The part 1030 may be usually referred to as a transceiver module, a transceiver machine, a transceiver circuit, a transceiver, or the like. A transceiver module in the part 1030 may also be referred to as a transceiver machine, a transceiver, or the like, and includes an antenna 1033 and a radio frequency circuit (not shown in the figure). The radio frequency circuit is mainly configured to perform radio frequency processing. Optionally, in the part 1030, a component configured to implement a receiving function may be considered as a receiver, and a component configured to implement a sending function may be considered as a transmitter. In other words, the part 1030 includes a receiver 1032 and a transmitter 1031. The receiver machine may also be referred to as a receiving module, a receiver, a receiver circuit, or the like. The transmitter may be referred to as a transmitting module, a transmitter, a transmitter circuit, or the like.

The part 1010 and the part 1020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards simultaneously share one or more processors.

In an implementation, the transceiver module in the part 1030 is configured to perform receiving and sending-related processes performed by the network device in the embodiment shown in FIG. 4. The processor in the part 1010 is configured to perform a processing-related process performed by the network device in the embodiment shown in FIG. 4.

It should be understood that, FIG. 10 is merely an example rather than a limitation, and the network device including the processor, the memory, and the transceiver may not rely on the structure shown in FIG. 10.

When the communication apparatus 1000 is the chip, the chip includes a transceiver and a processor. The transceiver may be an input/output circuit or a communication interface. The processor is a processor, a microprocessor, or an integrated circuit integrated on the chip. A sending operation performed by the network device in the foregoing method embodiment may be understood as an output of the chip, and a receiving operation performed by the network device in the foregoing method embodiment may be understood as an input of the chip.

An embodiment of this application further provides a communication system. The communication system includes the terminal device and the network device in the foregoing embodiments. The terminal device is configured to perform all or a part of steps in the embodiment shown in FIG. 4. The network device is configured to perform all or a part of steps in the embodiment shown in FIG. 4.

All or a part of the technical solutions provided in embodiments of this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, a terminal device, a network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, the examples may be mutually referenced. For example, the methods and/or the terms in the method embodiment may be mutually referenced. For example, the functions and/or the terms in the apparatus embodiments may be mutually referenced. For example, the functions and/or the terms between the apparatus example and the method example may be mutually referenced.

Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

**Claims**

1. A precoding matrix transmission method, comprising:

   receiving first configuration information, wherein the first configuration information is for configuring resources of K port groups, each of the K port groups comprises a plurality of antenna ports, and K is a positive integer; and
   sending first precoding matrix indicator PMI information, wherein the first PMI information is determined based on P groups of channel information, the P groups of channel information are determined based on a reference signal received on the resources of the K port groups, and P is an integer greater than 1.

2. The method according to claim 1, wherein the first configuration information is further for configuring Q groups of coefficients; and before sending the first precoding matrix indicator PMI information, the method further comprises:

   determining K groups of channel information based on the reference signal received on the resources of the K port groups, wherein the K groups of channel information respectively correspond to the K port groups; and
   determining the Q groups of channel information based on the Q groups of coefficients and the K groups of channel information, wherein Q is greater than K, and the Q groups of channel information comprise the P groups of channel information.

3. The method according to claim 1, wherein K is greater than 1; and before sending the first precoding matrix indicator PMI information, the method further comprises:
   determining K groups of channel information based on the reference signal received on the resources of the K port groups, wherein the K groups of channel information respectively correspond to the K port groups, and the K groups of channel information comprise the P groups of channel information.

4. The method according to any one of claims 1 to 3, further comprising:

   receiving information indicating a value of P; or
   receiving index set information indicating the P groups of channel information.

5. The method according to any one of claims 1 to 4, further comprising:
   receiving second configuration information, wherein the second configuration information is for configuring the first codebook parameter combination and/or a quantity $N_3$ of first precoding matrices, a value of at least one parameter in the first codebook parameter combination is determined based on the value of P, and the quantity $N_3$ of first precoding matrices is determined based on the value of P.

6. The method according to any one of claims 1 to 4, further comprising:
receiving third configuration information, wherein the third configuration information is for configuring a second codebook parameter combination and/or a quantity $P_{CSI-RS}$ of second precoding matrices, a value of at least one parameter in the second codebook parameter combination is determined based on the value of P, and the quantity $P_{CSI-RS}$ of second precoding matrices is determined based on the value of P.

7. A precoding matrix transmission method, comprising:

sending first configuration information, wherein the first configuration information is for configuring resources of K port groups, each of the K port groups comprises a plurality of antenna ports, and K is a positive integer; and
receiving first precoding matrix indicator PMI information, wherein the first PMI information is determined based on P groups of channel information, the P groups of channel information are determined based on a reference signal on the resources of the K port groups, and P is an integer greater than 1.

8. The method according to claim 7, wherein the first configuration information is further for configuring Q groups of coefficients, the Q groups of coefficients are for determining Q groups of channel information, the Q groups of channel information comprise the P groups of channel information, Q is greater than K, and Q is greater than or equal to P.

9. The method according to claim 7, wherein the K groups of channel information comprise the P groups of channel information, and the K groups of channel information respectively correspond to the K port groups.

10. The method according to any one of claims 7 to 9, further comprising:

sending information indicating a value of P; or
sending index set information indicating the P groups of channel information.

11. The method according to any one of claims 7 to 10, further comprising:
sending second configuration information, wherein the second configuration information is for configuring the first codebook parameter combination and/or a quantity $N_3$ of first precoding matrices, a value of at least one parameter in the first codebook parameter combination is determined based on the value of P, and the quantity $N_3$ of first precoding matrices is determined based on the value of P.

12. The method according to claim 5 or 11, wherein the quantity $N_3$ of first precoding matrices and the value of P satisfy the following relationship:

$$N_3 = \sum_{p=0}^{P-1} N_{3,p},$$

wherein $N_{3,p}$ is a quantity of sub-bands corresponding to a $p^{th}$ group of channel information in the P groups of channel information, and p is an integer from 0 to P-1.

13. The method according to claim 12, wherein the first PMI information is determined based on the first codebook parameter combination and the $N_3$ first precoding matrices, wherein

an $i^{th}$ first precoding matrix in the $N_3$ first precoding matrices is an $\lfloor i/P \rfloor^{th}$ precoding matrix in an (i mod P)$^{th}$ group of channel information in the P groups of channel information, or the $i^{th}$ first precoding matrix in the $N_3$ first precoding matrices is an ($N_{3,p}$ mod P)$^{th}$ precoding matrix in an $\lfloor i/N_{3,p} \rfloor^{th}$ group of channel information in the P groups of channel information; and
mod is a modulo operator, i is an integer from 1 to $N_3$, and $\lfloor \ \rfloor$ represents a rounding down operator.

14. The method according to any one of claims 5 and 11 to 13, wherein the first codebook parameter combination comprises one or more of the following parameters: a quantity L of beams, a factor $p_{\upsilon}$ of a quantity of vectors, and a factor $\beta$ of a quantity of non-zero elements.

15. The method according to any one of claims 7 to 10, further comprising:
sending third configuration information, wherein the third configuration information is for configuring a second codebook parameter combination and/or a quantity $P_{CSI-RS}$ of second precoding matrices, a value of at least one parameter in the second codebook parameter combination is determined based on the value of P, and the quantity $P_{CSI-RS}$ of second precoding matrices is determined based on the value of P.

16. The method according to claim 6 or 15, wherein the quantity $P_{CSI-RS}$ of second precoding matrices and the value of P satisfy the following relationship:

$$P_{CSI-RS} = \sum_{p=0}^{P-1} P_{CSI-RS,p},$$

wherein $P_{CSI-RS,p}$ is a quantity of antenna ports corresponding to a $p^{th}$ group of channel information in the P groups of channel information, and p is an integer from 0 to P-1.

17. The method according to claim 16, wherein the first PMI information is determined based on the second codebook parameter combination and the $P_{CSI-RS}$ second precoding matrices, wherein

a $j^{th}$ precoding matrix in the $P_{CSI-RS}$ first precoding matrices is a $\lfloor j/P \rfloor^{th}$ precoding matrix in a $(j \bmod P)^{th}$ group of channel information in the P groups of channel information, or the $j^{th}$ precoding matrix in the $P_{CSI-RS}$ second precoding matrices is a $(P_{CSI-RS,p} \bmod P)^{th}$ precoding matrix in a $\lfloor j/P_{CSI-RS,p} \rfloor^{th}$ group of channel information in the P groups of channel information; and
mod is a modulo operator, j is an integer from 1 to $P_{CSI-RS}$, and $\lfloor \ \rfloor$ represents a rounding down operator.

18. The method according to any one of claims 6 and 15 to 17, wherein the second codebook parameter combination comprises one or more of the following parameters: a first dimension $N_1$, a second dimension $N_2$, a first coefficient $O_1$, and a second coefficient $O_2$.

19. A communication apparatus, comprising a communication module and a processing module, wherein the communication module is configured to: under control of the processing module, perform the following operations:

receiving first configuration information, wherein the first configuration information is for configuring resources of K port groups, each of the K port groups comprises a plurality of antenna ports, and K is a positive integer; and
sending first precoding matrix indicator PMI information, wherein the first PMI information is determined based on P groups of channel information, the P groups of channel information are determined based on a reference signal received on the resources of the K port groups, and P is an integer greater than 1.

20. The apparatus according to claim 19, wherein the first configuration information is further for configuring Q groups of coefficients; and before controlling the communication module to send the first precoding matrix indicator PMI information, the processing module is further configured to:

determine K groups of channel information based on the reference signal received on the resources of the K port groups, wherein the K groups of channel information respectively correspond to the K port groups; and
determine the Q groups of channel information based on the Q groups of coefficients and the K groups of channel information, wherein Q is greater than K, and the Q groups of channel information comprise the P groups of channel information.

21. The apparatus according to claim 19, wherein K is greater than 1; and before controlling the communication module to send the first precoding matrix indicator PMI information, the processing module is further configured to:
determine K groups of channel information based on the reference signal received on the resources of the K port groups, wherein the K groups of channel information respectively correspond to the K port groups, and the K groups of channel information comprise the P groups of channel information.

22. The apparatus according to any one of claims 19 to 21, wherein the communication module is further configured to:

receive information indicating a value of P; or
receive index set information indicating the P groups of channel information.

23. The apparatus according to any one of claims 19 to 22, wherein the communication module is further configured to: receive second configuration information, wherein the second configuration information is for configuring the first codebook parameter combination and/or a quantity $N_3$ of first precoding matrices, a value of at least one parameter in the first codebook parameter combination is determined based on the value of P, and the quantity $N_3$ of first precoding matrices is determined based on the value of P.

24. The apparatus according to any one of claims 19 to 22, wherein the communication module is further configured to: receive third configuration information, wherein the third configuration information is for configuring a second codebook parameter combination and/or a quantity $P_{CSI-RS}$ of second precoding matrices, a value of at least one parameter in the second codebook parameter combination is determined based on the value of P, and the quantity $P_{CSI-RS}$ of second precoding matrices is determined based on the value of P.

25. A communication apparatus, comprising a communication module and a processing module, wherein the communication module is configured to: under control of the processing module, perform the following operations:

   sending first configuration information, wherein the first configuration information is for configuring resources of K port groups, each of the K port groups comprises a plurality of antenna ports, and K is a positive integer; and receiving first precoding matrix indicator PMI information, wherein the first PMI information is determined based on P groups of channel information, the P groups of channel information are determined based on a reference signal on the resources of the K port groups, and P is an integer greater than 1.

26. The apparatus according to claim 25, wherein the first configuration information is further for configuring Q groups of coefficients, the Q groups of coefficients are for determining Q groups of channel information, the Q groups of channel information comprise the P groups of channel information, Q is greater than K, and Q is greater than or equal to P.

27. The apparatus according to claim 25, wherein the K groups of channel information comprise the P groups of channel information, and the K groups of channel information respectively correspond to the K port groups.

28. The apparatus according to any one of claims 25 to 27, wherein the communication module is further configured to: under control of the processing module, send information indicating a value of P; or send index set information indicating the P groups of channel information.

29. The apparatus according to any one of claims 25 to 28, wherein the communication module is further configured to: under control of the processing module, send second configuration information, wherein the second configuration information is for configuring the first codebook parameter combination and/or a quantity $N_3$ of first precoding matrices, a value of at least one parameter in the first codebook parameter combination is determined based on the value of P, and the quantity $N_3$ of first precoding matrices is determined based on the value of P.

30. The apparatus according to claim 23 or 29, wherein the quantity $N_3$ of first precoding matrices and the value of P satisfy the following relationship:

$$N_3 = \sum_{p=0}^{P-1} N_{3,p},$$

   wherein $N_{3,p}$ is a quantity of sub-bands corresponding to a $p^{th}$ group of channel information in the P groups of channel information, and p is an integer from 0 to P-1.

31. The apparatus according to claim 30, wherein the first PMI information is determined based on the first codebook parameter combination and the $N_3$ first precoding matrices, wherein

   an $i^{th}$ first precoding matrix in the $N_3$ first precoding matrices is an $\lfloor i/P \rfloor^{th}$ precoding matrix in an (i mod P)$^{th}$ group of channel information in the P groups of channel information, or the $i^{th}$ first precoding matrix in the $N_3$ first precoding matrices is an $(N_{3,p}$ mod P)$^{th}$ precoding matrix in an $\lfloor i/N_{3,p} \rfloor^{th}$ group of channel information in the P groups of channel information; and mod is a modulo operator, i is an integer from 1 to $N_3$, and ⌊ ⌋ represents a rounding down operator.

32. The apparatus according to any one of claims 23 and 29 to 31, wherein the first codebook parameter combination comprises one or more of the following parameters: a quantity L of beams, a factor $p_0$ of a quantity of vectors, and a factor $\beta$ of a quantity of non-zero elements.

33. The apparatus according to any one of claims 25 to 28, wherein the communication module is further configured to: under control of the processing module, send third configuration information, wherein the third configuration information is for configuring a second codebook parameter combination and/or a quantity $P_{CSI-RS}$ of second precoding matrices, a value of at least one parameter in the second codebook parameter combination is determined based on the value of P, and the quantity $P_{CSI-RS}$ of second precoding matrices is determined based on the value of P.

34. The apparatus according to claim 24 or 33, wherein the quantity $P_{CSI-RS}$ of second precoding matrices and the value of P satisfy the following relationship:

$$P_{CSI-RS} = \sum_{p=0}^{P-1} P_{CSI-RS,p},$$

wherein $P_{CSI-RS,p}$ is a quantity of antenna ports corresponding to a $p^{th}$ group of channel information in the P groups of channel information, and p is an integer from 0 to P-1.

35. The apparatus according to claim 34, wherein the first PMI information is determined based on the second codebook parameter combination and the $P_{CSI-RS}$ second precoding matrices, wherein

a $j^{th}$ precoding matrix in the $P_{CSI-RS}$ first precoding matrices is a $\lfloor j/P \rfloor^{th}$ precoding matrix in a $(j \bmod P)^{th}$ group of channel information in the P groups of channel information, or the $j^{th}$ precoding matrix in the $P_{CSI-RS}$ second precoding matrices is a $(P_{CSI-RS,p} \bmod P)^{th}$ precoding matrix in a $\lfloor j/P_{CSI-RS,p} \rfloor^{th}$ group of channel information in the P groups of channel information; and
mod is a modulo operator, j is an integer from 1 to $P_{CSI-RS}$, and $\lfloor \ \rfloor$ represents a rounding down operator.

36. The apparatus according to any one of claims 24 and 33 to 35, wherein the second codebook parameter combination comprises one or more of the following parameters: a first dimension $N_1$, a second dimension $N_2$, a first coefficient $O_1$, and a second coefficient $O_2$.

37. A communication system, comprising the communication apparatus according to any one of claims 19 to 24, 30 to 32, and 34 to 36, and the communication apparatus according to any one of claims 25 to 36.

38. A communication apparatus, comprising:
a processor, wherein the processor is coupled to a memory, and the processor is configured to invoke computer program instructions stored in the memory, to perform the method according to any one of claims 1 to 18.

39. A computer-readable storage medium, wherein the computer-readable storage medium stores instructions, and when the instructions are run on a computer, the computer is caused to perform the method according to any one of claims 1 to 18.

40. A chip, wherein the chip is configured to read a computer program stored in a memory, to perform the method according to any one of claims 1 to 18.

FIG. 1A

FIG. 1B

FIG. 2

FIG. 3

Terminal device

Network device

S401: First configuration information
(resources of K port groups)

S402: Second configuration information
and/or third configuration information

S403: Send a reference signal on the
resources of the K port groups

S404: Determine P groups of channel
information based on the reference signal
received on resources of K ports

S405: First PMI information
(based on the P groups of channel information)

FIG. 4

First precoding matrix

(a)

(b)

(c)

FIG. 5

FIG. 6(a)

FIG. 6(b)

FIG. 6(c)

FIG. 7

800

Communication apparatus

830

Communication
interface

810

Processor

840

820

Memory

FIG. 8

900

Communication
apparatus

910

Processor

930

Transceiver

933

Transmitter

931

932

920

Memory

Computer
program code

Receiver

FIG. 9

FIG. 10

## INTERNATIONAL SEARCH REPORT

| International application No. |
| --- |
| **PCT/CN2024/099914** |

| A. | CLASSIFICATION OF SUBJECT MATTER |
| --- | --- |

H04B7/0456(2017.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT: VEN: CNKI: 端口, 组, 预编码矩阵指示, 信道信息, port, group, PMI, precoding matrix indication, channel information

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106953672 A (ZTE CORP.) 14 July 2017 (2017-07-14) description, paragraphs [0002]-[0187], and figures 1-4 | 1-40 |
| A | CN 111447047 A (HUAWEI TECHNOLOGIES CO., LTD.) 24 July 2020 (2020-07-24) entire document | 1-40 |
| A | CN 114285447 A (ZTE CORP.) 05 April 2022 (2022-04-05) entire document | 1-40 |
| A | US 2023009991 A1 (DATANG MOBILE COMMUNICATIONS EQUIPMENT CO., LTD.) 12 January 2023 (2023-01-12) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 August 2024** | **08 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/099914** |

| Patent document cited in search report | | | Publication date (day/month/year) | Patent family member(s) | | | Publication date (day/month/year) |
| --- | --- | --- | --- | --- | --- | --- | --- |
| CN | 106953672 | A | 14 July 2017 | None | | | |
| CN | 111447047 | A | 24 July 2020 | None | | | |
| CN | 114285447 | A | 05 April 2022 | None | | | |
| US | 2023009991 | A1 | 12 January 2023 | US | 11901979 | B2 | 13 February 2024 |

Form PCT/ISA/210 (patent family annex) (July 2022)

**EP 4 718 741 A1**

**Patent documents cited in the description**

- CN 202310838925